# EUROPEAN PATENT APPLICATION

(11) **EP 1 197 251 A2**
(43) Date of publication of application: **17.04.2002**
(21) Application number: 01308557.6
(22) Date of filing: 08.10.2001
(51) Int. Cl.: A63F 13/12

(54) **Wireless interactive electronic toy**

(30) Priority: 10.10.2000 US 684333; 14.06.2001 US 880083
(71) Applicant: Hasbro Inc., Pawtucket, RI 02862-1059 (US)
(72) Inventor: Roach, Alan P., Wilbraham, MA 01095 (US); Kullgren, Peter M., Springfield, MA 01105 (US); Sanfilippo, Daniel, Springfield, MA 01105 (US); Merino, Darrell, East Longmeadow, MA 01028 (US); Franklin La Barbara, A. Jr., Rumford, RI 02916 (US); Wiesenhahn, Mark, Milton, MA 02186 (US); Melone, Georgina M., Barrington, RI 02806 (US)
(74) Representative: Skone James, Robert Edmund

(57) **Abstract**

Wireless interactive gaming system where users can engage in a solo play mode to collect components to build warriors. The user uses the collected components to build a warrior that can be used to attack other game units. Communication can occur with or without handshaking. Warriors are created from a head, body, and tail with varying abilities and with a pre-programmed attack sequence.

## Description

The invention relates to a toy, and more particularly to a handheld electronic toy that interacts wirelessly with other handheld electronic toys.

Handheld electronic games have been popular forms of entertainment for both children and adults for many years. A typical handheld game unit includes an interface having several buttons for receiving player input and an LCD or LED panel for displaying information to a player. A player may use the buttons to direct the movement of a character or game piece, select options from a menu, or perform other actions.

In recent years, handheld game systems have provided mechanisms to permit multiple players to connect a cable between handheld units to facilitate communication between two units in multiplayer interactive games. These multiplayer games provide increased entertainment value by allowing players to compete with one another.

In one general aspect, an electronic game unit includes a housing, a display, at least one input device, a power source, a transceiver, and a computing device. The computing device is positioned in the housing and is connected to the other components. The computing device is programmed to display a player character and to wirelessly transmit information regarding the player character.

Implementations may include units having the input device(s), the power source, and the transceiver contained within the housing. The display may be implemented using, for example, a liquid crystal display or an active matrix display. Various controls may be used for the input device(s), such as, for example, directional buttons, a sound control, a pause button, and select button(s). Additionally, the electronic game unit may include an on/off switch. The on/off switch may be associated with a light emitting diode (LED) positioned near or within the switch. The transceiver may communicate with other game units using radio frequency signals.

Implementations may provide a computing device that includes a memory and a processor connected to the memory. The processor may be a general-purpose computing processing unit or an application-specific integrated circuit, and the memory may include one or more of the following: random access memory (RAM), static RAM (SRAM), dynamic RAM (DRAM), and synchronous DRAM (SDRAM). The memory may be internal or external to the processor.

The electronic game unit may be powered by a rechargeable battery such as a lithium, nickel-metal hydride, or nickel-cadmium rechargeable battery. The unit also may be powered by a non-rechargeable battery.

Implementations include an electronic game unit with a computing device configured to provide a solo game module that may be used to obtain components. These components may be used to acquire, equip, or build one or more player characters. The electronic game unit also may include a tutorial mode that may be used to demonstrate one or more features of the game. For example, the tutorial mode may be used to demonstrate features of the solo game module. Implementations also may include a fight module that wirelessly sends player character information between game units.

Player characters may be created using a stasis lab module and components, items, or equipment obtained using the solo game module. For example, the solo game module may be used to obtain character components, such as, for example, a head, a body, and a tail. These components may be assembled to form a player character. A combat module provides a mechanism for player characters to fight one another.

In another general aspect, an electronic game unit may be administered using a base station. The base station includes a transceiver operable to wirelessly send and receive data. Administrative functions may be performed by determining which functions to perform and transmitting a signal indicative of the desired administrative action. The signal is operable to perform the administrative action on an electronic game unit.

Various administrative functions may be performed. For example, features may be activated and/or deactivated and data may be uploaded and/or downloaded to or from the electronic game unit. Additionally, an administrative function may be used to test the electronic game unit and/or to display information regarding the unit.

In another general aspect, receiving data from an electronic game unit may include entering a sleep mode to minimize battery drain, and periodically checking a communication channel to determine if the channel is in use. If the channel is in use, then a receive mode is entered and data being transmitted on the communication channel is received. Implementations may include using a nominal transmission frequency of 315 MHz with a data transmission rate of 12kbps.

In yet another general aspect, an electronic game unit includes a transceiver operable to communicate with enemy electronic game unit(s), a memory, and a computing device. The memory stores information regarding a designated character that is transmitted to enemy game units.

In another general aspect, an electronic game unit includes a memory operable to store one or more characters and a computing device connected to the memory. The computing device may be configured to provide a game including a collection phase, an assembly phase, and a battle phase. The collection phase may be used to obtain character components that may be assembled in the assembly phase to create characters. The characters may then be used in the battle phase to combat enemies.

The character components may include elements such as body parts (such as a head, tail, or body), skills, weapons, attack modes, defense modes, strategies, and experiences. Created characters may be assembled into a lineup such that multiple characters may be deployed in the battle phase.

The battle phase may provide combat against enemies internal to the game, or against one or more players connected via a wired, wireless, or hybrid connection. Battles may be initiated automatically or semi-automatically based on the proximity of units (virtually or physically) to the game unit. Wireless implementations may provide the ability to disable radio frequency broadcasting. Wired implementations may include access across a wide-area network (WAN) such as the Internet.

Various implementations may provide a display or sound component. Characters may improve or gain strength based on battle experiences. Electronic game units may be handheld (e.g., standalone or personal digital assistant (PDA)), or computer-hosted (e.g., cartridge-based, console-based, or computer-readable medium based).

Other features and advantages will be apparent from the description and drawings, and from the claims.
FIG. 1A is a top view of a handheld wireless electronic toy.
FIG. 1B is a bottom view of the toy of FIG 1A.
FIG. 1C is a block diagram showing hardware components of the toy of FIG 1A.
FIG 2A is a block diagram showing the play environment provided by the toy of FIG. 1A.
FIG. 2B is a block diagram identifying environment variables used by the toy of FIG 1A.
FIGS. 3A-11 are state diagrams showing operation of the toy of FIG 1A.
FIG. 12A is a diagram of a user interface display screen of the toy of FIG. 1A.
FIGS. 12B-17 are flow charts illustrating procedures implemented by the toy of FIG. 1A.
FIG. 18A is a state diagram describing communication by a frequency division duplex system.
FIG. 18B is a state diagram describing communication by a time division duplex system implementable by the toy of FIG 1A.
FIG. 18C is a state diagram describing another method of communication in a frequency division duplex system.
FIG. 19 is a state diagram describing communication handshaking.
FIG. 20 is a state diagram describing a trade communication protocol implemented by the toy of FIG 1A.
FIG 21 is a state diagram describing a combat communication protocol implemented by the toy of FIG 1A.
FIG 22 is a state diagram illustrating a PCU information communication protocol implemented by the toy of FIG 1A.
FIG. 23 is a state diagram illustrating a feature activation communication protocol implemented by the toy of FIG 1A.
FIG. 24 is a state diagram illustrating a feature deactivation communication protocol implemented by the toy of FIG 1A.
FIG. 25 is a state diagram illustrating a database upload communication protocol implemented by the toy of FIG 1A.
FIG. 26 is a state diagram illustrating a database download communication protocol implemented by the toy of FIG 1A.
FIGS. 27A-27Q are icons used by a user interface of the toy of FIG 1A.
FIG 28 is a state diagram illustrating a viral release damage path in the toy of FIG 1A.
FIG. 29 is a state diagram illustrating how a prion in an ability list is affected by damage from a viral release in the toy of FIG 1A,

Like reference symbols in the various drawings indicate like elements.

### Game Overview

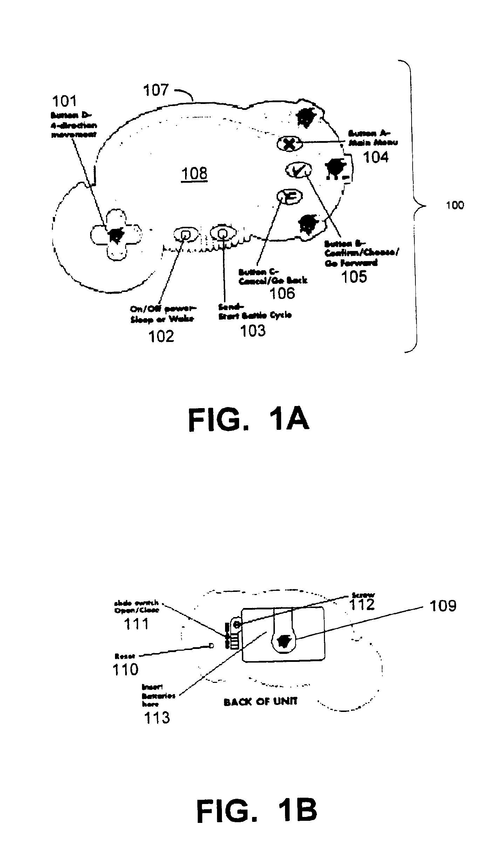

Referring to FIGS. 1A and 1B, a handheld electronic toy 100 includes buttons 101-106 on a case 107 for accepting user input, and a display 108 for providing output to a user. Directional buttons 101 allow a user to specify a direction to move and to navigate menu selections. On/off button 102 turns the toy 100 on or off. The on/off button 102 may contain a light emitting diode (LED) to indicate whether the toy 100 is on or off Send button 103 begins a battle cycle, invoking wireless combat with other toys 100. Select buttons 104, 105, and 106 allow a user to make selections and scroll forwards and/or backwards through menus. Clip 109 is a mechanism for attaching the handheld electronic 100 to, for example, a belt, a backpack, or a notebook. Reset button 110 may be depressed to return the toy 100 to its original state. Slide switch 111 and screw 112 hold the battery compartment door 113 closed. Clip 109 may be attached to battery compartment door 113.

Slide switch 111 is activated to open the battery compartment. When activated, slide switch 111 causes the unit to go into a low-power mode so that the power supply (e.g., batteries) may be temporarily disconnected without losing any stored data. This allows, for example, a user to change one or batteries without losing any data. When placed in a low-power mode, the unit may be powered by a capacitor or some alternate energy source for a period of time while the primary energy source is disabled. To prevent toy 100 from entering the low-power state accidentally, screw 112 holds the switch in the deactivated position.

Some implementations of toy 100 may include a sound button to control the audio of the toy 100 and/or a pause button to allow a user to pause play.

Referring also to FIG. 1C, a computing device 150 that is contained within the case 107 of the toy 100 may include a central processing unit (CPU) 155 and a storage medium 160. Any computer storage technologies may be used with the computing device, including, for example, random access memory (RAM), read-only memory (ROM), smart cards, and dynamic random access memory (DRAM). The computing device receives inputs from the input buttons 101-106) and sends output to display 108, speaker 165, and LED 170. In addition, computing device 150 is connected to transceiver 175 for sending and receiving information to other devices. The computing device 150 also is connected to power source 180, which typically includes one or more batteries.

Using one implementation of the handheld electronic toy, play is premised on the following storyline: "In the early 21st century, startling advances were made in nano-technology. Technologists focused on the construction of nano-robots to be used in medicine and the ever-growing field of bio-computer engineering. The Micro-Organism Research Institute, also known as MicroCon, was a pioneer in nano-robotic technology. They patented the highly sophisticated Y-series NanoBot™ line. The same size as bacteria, they were equipped with all the tools needed to identify and classify microorganisms of any kind. The patented technology utilized a super fast organic brain instead of microchips. As such, their micro-motors and servos ran on the same energy as living cells. These organic brains were made from the DNA of the scientists that created and programmed them.

"During the mid 21st century, NASA researchers studying a field of meteorites in the deep regions of the Antarctic discovered that some of the meteorites contained signs of microbial life. The meteorites were immediately rushed to MicroCon for further evaluation. Initial scans did indeed verify that there was alien microbial life inside.

"MicroCon employed their latest series, the X-series, of NanoBots to dissect the meteorites. After weeks of exhaustive investigation, the results yielded that the meteorites were comprised of several layered sections surrounding a central core. The outer shell was comprised of many heavy-gravity particles. The layer underneath contained lightweight elements that were in a high-energy state. The final layer was laden with materials poisonous to any known life.

"NanoBots penetrated all the layers, gathering three (3) dormant strains of an alien virus. Each strain was indigenous to a separate layer. When the NanoBots penetrated the core, the energy state of the meteorite was altered, triggering a chain reaction that allowed the RNA sequencing of the alien virus to take over the organic brains of the NanoBots.

"Suddenly self aware, these viruses find themselves in a hostile environment and a new biomechanical life form is created ... the POX!

"Upon the discovery of the POX, MicroCon quickly realized that somehow the various layers and core of the meteorite acted as a neutralizing agent to contain the virus strains. They theorized that an alien race had enclosed deadly viruses in these materials to dispose of them from their world.

"With this latest breakthrough, MicroCon developed patented technology to contain and cultivate the POX. These PCUs were specially constructed from the materials found within the meteorite layers and core. PCUs are seeded with inert pieces of a virus strain. These pieces are weakened versions of the virus used to vaccinate the PCU from the particular virus strain. The PCU also contains a robotic NanoBot core. This core is activated once it is sequenced with the DNA of a host. Once active, the NanoBot core will enable the host to cultivate POX within the PCU.

"PCUs are the physical units that players carry on their belts to use and interface with the viruses they create. They are specially constructed with meteorite samples integrated into the core. When the player first powers up a new unit, their DNA is sampled. These samples are used to create the robotic core of the POX. The player's unique DNA sequencing is integrated into every prion strand that originates from the PCU.

"PCUs have an on/off switch that has an LED underneath the switch. This LED will light up when the unit is turned on. This is to represent that the sampling process is occurring. It is from this first contact that the DNA is 'sampled' and loaded into the robot core.

"The original alien viruses were based from a common genetic pool. The various strains, however, evolved to their particular environments. POX are derived from a combination of an original virus strain and the X series NanoBots that the virus infected when they were discovered. Since the virus assimilated the NanoBots into their DNA sequencing, POX variants have mechanical attributes as well. POX use these mechanical attributes to attack other POX. The method of attack for all species is always the same. They may attack with any body part, one at a time and defend themselves in the same manner. The combat sequence is embedded into the fully developed virus after it is completed.

"Each POX is comprised of three (3) prion strands. These translate into three body parts (also called sections): head, body, and tail. Each prion strand carries abilities that manifest when they are attached to other prions in the correct sequence."

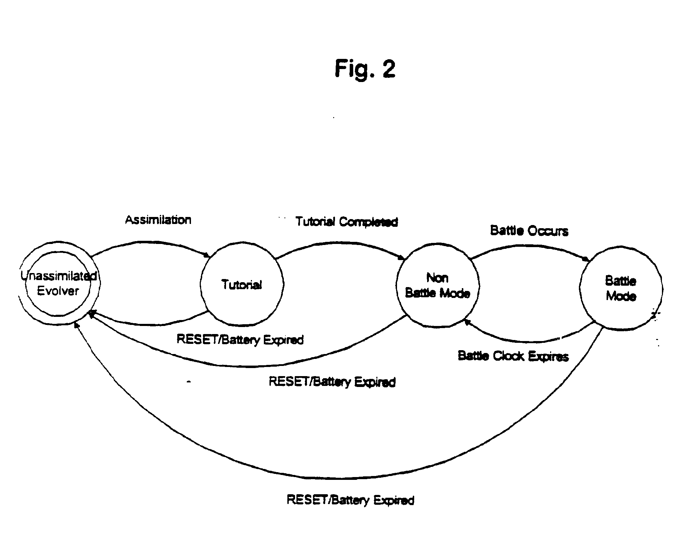

The handheld electronic toy 100 acts as the PCU in the storyline provided above. Referring to FIG. 2A, the toy 100 provides a play environment 200 having a number of modules. For example, the toy may provide a solo game module 210 that permits the player to collect body parts for use in building POX warriors. In particular, body parts collected using the solo game module 210 are made available to a stasis lab module 215 that the player uses to build POX warriors. Additionally, the toy may provide a fight module 220 that the player uses to interact with the handheld electronic toys of other players. When a POX warrior attacks, a combat module 225 determines the outcome. Some implementations provide a tutorial module 205 that introduces the player to the operation and concepts of the toy.

In some implementations, solo game module 210 allows a player to traverse an arena, fighting enemies and collecting new body parts to add to a library. When a player initially enters the arena, the PCU requests that the player select a POX to play. Then, the player is asked to choose a level. In one implementation, 17 different levels are provided. Each level includes various tasks and battling opportunities. Doors may be locked, teleporters may take a player to another area of the level, and most have secret areas that hold surprises.

Each level in the arena may include objects such as the following: a door (some are hidden, closed, or locked); a portal where the arena is entered; a pylon to help identify locations within the arena; a cyropod holding good and bad things; and currency for use to purchase healing. When a player bumps into an enemy POX, its data is shown. If the user presses the appropriate button, information regarding the enemy POX is displayed, such as its hit points. The player may press a button to begin a combat sequence. When combat is initiated, the user is asked to specify the combat sequence for the battle. The selection of combat sequence does not change the predetermined combat sequence chosen when the POX was created. When any body part loses all of its hit points, the POX is teleported out of the arena, healed, and placed back in the lineup.

The toy permits a user to develop and name POX warriors with various strengths and abilities. A stronger POX warrior will destroy an enemy POX and duplicate itself on the handheld electronic toy of the enemy POX. The POX warrior will continue to try to spread and duplicate itself on as many other handheld electronic toys as possible.

In summary, the player uses the solo game module 210 to collect body parts, and the player then uses the stasis lab module 215 and the collected parts to build POX warriors, with each warrior having a character name and a preprogrammed combat sequence. Next, the player uses the fight module 220 to determine which POX warrior will represent the toy, also referred to as a POX unit or a POX containment unit (PCU), in combat. Warriors from different POX units combat each other by sending packets of information into the public airwaves for other POX units to read. Combat takes place immediately without the POX unit's confirmation of a received packet. A losing POX unit loses its POX warrior and becomes infected by the winning POX warrior. A winning POX unit spreads its POX warrior like a virus to other POX units while assimilating any weaker POX warriors into the stasis lab module 215 to be dissected for use in future POX warriors.

In one implementation, there are three varieties of handheld electronic toys. Each variety represents a different POX virus strain. The first variety, representing the "Spino" virus strain, is colored red, is referred to as a "Red Unit," and has power as its primary attribute. All abilities that are based on Spino prions exhibit strength, power, and force.

The next variety, representing the "Cycro" virus strain, is colored green, is referred to as a "Green Unit," and has speed as its primary attribute. All abilities that are based on Cycro prions exhibit speed, agility, and stealth.

The final variety, representing the "Plasmo" virus strain, is colored blue, is referred to as a "Blue Unit," and has defense as its primary attribute. All abilities that are based on Plasmo prions exhibit deception, defense, and camouflage.

Each handheld electronic toy 100, which also may be referred to as a handheld unit, a POX unit, or a POX containment unit (PCU), is a red unit, a blue unit, or a green unit. A user uses the solo game module 210 (i.e., the research area) to acquire body parts having abilities corresponding to the color of the unit (i.e., a user playing the solo game on a red unit can acquire body parts having power as the dominant attribute). Abilities of different body parts are summarized below.

Referring to FIG 2B, the various processes and modules used to implement toy 100 may include environment variables 250. For example, an operating state variable 255 maintains the present operating state for the game. Operating state 255 provides one mechanism for determining which module is presently active. For example, when a unit is first powered, the operating state 255 may be checked to determine whether toy 100 should enter tutorial module 205. Additionally, a battle clock 260 may be provided for use by combat module 225 in resolving conflicts between POX warriors. Finally, a gateway POX variable 265 may be used to identify a POX warrior that has been created using the stasis lab module 215 from components collected using the solo game module 210 and selected using the fight module 220 to guard the toy 100 from attack by other toys 100.

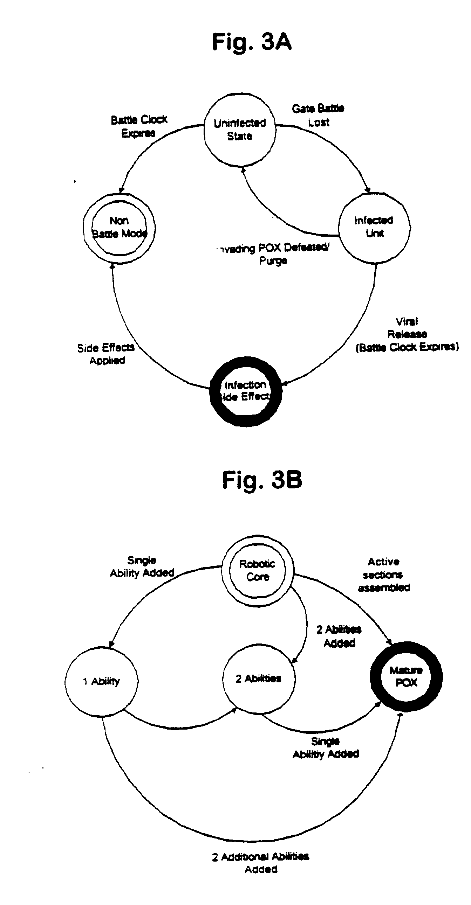

When the game is initially turned on by pressing on/off button 102, the handheld unit 100 functions as shown in FIG 3A, beginning with the unassimilated PCU state 300. The handheld unit 100 then assimilates and enters the tutorial state 301. If the handheld unit is reset or loses power, then the handheld unit returns from its previous state to the unassimilated PCU state 300. Once the tutorial state 301 is complete, the unit enters the non-battle mode state 302 and remains in this state until a battle is initiated. When a battle is initiated, the system enters the battle mode state 303 until a battle clock expires, at which point the unit returns to the non-battle mode state.

The battle clock defines the duration of the battle mode. When the PCU is in the non-battle mode, and a battle is initiated, the clock is activated and the PCU is placed in the battle mode state. In one implementation, the clock expires in approximately 10 minutes. In other implementations, the duration of the battle clock may be longer or shorter. When the battle clock expires, one of two things happens: either the PCU peacefully transitions to the non-battle mode, or the PCU suffers a viral release of the infecting virus. The viral release occurs if there is a foreign POX in the gate at the expiration of the clock.

Non-battle mode occurs when the PCU first starts up or when the battle clock expires. During this state, the player is allowed to add POX warriors to the PCU's lineup, provided there is room in the lineup, which in one implementation, may include up to eight POX warriors. The player also may play the solo game and take other actions until the player initiates a battle by placing a POX warrior in the PCU's gate. Once a battle is initiated, the PCU is placed in battle mode.

During battle mode, the player can have up to eight anti-POX attempts. This means that the player may have up to eight POX put into the lineup. So, for example, if the player has three POX in the lineup, the player may create up to five additional POX during the battle mode. When the player has added the eighth POX to the lineup during the battle mode, the player is prohibited from adding any more POX to the lineup. The count is reset in every transition from non-battle mode to battle mode.

A PCU includes a lineup, a gate, a typhoid Mary counter, a pure victory counter, and a daily victory counter. The lineup is where generated POX warriors are stored. The gate is where a POX warrior is placed when the player is ready for the POX warrior to do battle. The counters are used to keep track of the player's success in battle, and to provide rewards to the player.

Whenever a POX warrior is placed in the gate during battle mode, or to initiate battle mode, the POX warrior is locked into the gate until it is defeated, it is purged, or the battle clock expires.

Virus initiation occurs when a PCU transmits a virus (i.e., a POX warrior) that attempts to infiltrate another PCU. A battle results when a PCU responds to another PCU's transmission. In general, any PCU that is in battle mode and receives a transmission from another PCU will engage in a battle. The winning POX warrior is placed in the gate of the other PCU, so that the losing PCU becomes infected. If the PCU that was victorious had previously been infected by an opponent's POX warrior, then that PCU gets a count added to a typhoid Mary counter. If the winning POX warrior was actually created at the victorious PCU, then the PCU will have both its pure victory counter and its daily victory counter incremented.

When a POX warrior, POX for short, invades a PCU, the PCU becomes infected. This state of infection persists until (1) the invading POX is defeated by one of the player's POX; (2) the invading POX is purged; or (3) the battle clock expires. A player may attempt to defeat an invading POX by placing a POX from the player's lineup into the gate. A player may purge the invading POX if the player's PCU has sufficient accumulated protein sequences (currency). If the player cannot get rid of the infection before the battle clock expires, then the infection achieves viral release. At this point, infection side effects take place and the battle clock is reset to neutral. FIG. 3B shows the infection lifecycle.

The PCU is in an uninfected state if the POX is in the battle mode and there is not an infecting POX in the gate. The PCU transitions to the infected state if a foreign POX enters the gate. This can be done by either leaving the gate unprotected (empty) or losing a battle. If the POX wins a battle, both the pure victory counter and the daily victory counter are incremented.

If the PCU has been invaded by a POX, the PCU is in an infected state. During the infected state, the player may still enter the incubator, tutorial, and research areas. The player will, however, be prevented from accessing the stasis area and certain gate functions. When in the infected state, the player may attempt to combat the invading POX with his/her own POX. If this attempt fails, that POX is lost. Only two times the number of incubator slots will be allowed to fight the invading POX. This is called the anti-POX attempts count. The count is reset upon purging or completion of an immuno-cycle.

If a player cannot purge an invading POX within the given time frame, the PCU enters the infected side effects state. This state simply handles applying the side effects that the PCU suffers due to viral release. At the completion of the application of the side effects, the battle clock becomes neutral, the number of anti-POX attempts is reset, and the PCU enters the non-battle mode state.

If the player ends up in a state where the player does not have enough abilities to construct a mature POX, the player must take a robotic core and construct a POX of all or some inert prions. The player then is forced to acquire additional abilities to construct a more powerful POX. Fortunately for the player, acquiring the first few pieces is relatively easy.

POX uses three internal counters to allow players to monitor their progress in the game: pure victory counter, daily victory counter, and typhoid Mary counter. Both the daily victory counter and the typhoid Mary counter maintain counts of the current battle mode or show the counts achieved in the previous battle mode if the battle clock is OFF (i.e., neutral). The pure victory counter is a lifelong count of how many victories the player has achieved in the history of the powered PCU.

The battle mode counters serve as currency during battle mode. The currency can be used to purge invading POX. Typhoid Mary counts are achieved when an infected PCU infects another PCU. Victory counts are achieved when a player's POX infects another PCU. The counters are summarized in Table 1.

**Table 1**

| **Counter** | **Lifecycle** | **Increment Source** | **Value** |
|---|---|---|---|
| Pure Victory | Lifetime | Player POX infects other | None |
| Daily Victory | Battle Mode | Player POX infects other | 2 |
| Typhoid Mary | Battle Mode | Infecting POX infects other | 1 |

FIG. 3C shows the various states of the POX lifecycle. A POX begins as a robotic core 350. A player then can add abilities to the robotic core to produce a POX with one ability 351, a POX with two abilities 352, or a mature POX with three abilities 353.

The prions from which the POX are built have several different types of variants. Inert prions are initially found within the tutorial. Once discovered, they will always be resident within the user's ability list. They are weakened viruses and contain no special abilities. Moreover, they can never increase in hitpoints. Ability prions are found within the research area (i.e., the solo game). They also may be acquired from POX placed in stasis or if the player is able to purge and assimilate a POX. These prion strands give POX potent abilities. They also may increase in hitpoints.

In addition to the special ability prions, there are clone and spy prions that can be collected within the research area. The clone and spy prions are special prions that are not identifiable; their initial markings will be by an RNA sequence. The player must discover or learn how to assemble the proper clone or spy pieces. Like ability prions, these may increase in hitpoints. The various prion types are summarized in Table 2.

**Table 2**

| **Prion Type** | **Initial Hitpoints** | **Initially Identifiable** |
|---|---|---|
| Inert | 10 | Yes |
| Ability | 30 | Yes |
| Clone | 30 | No |
| Spy | 5 | No |

Clone prion strands are hidden within the research area. Each strain has one clone prion per POX section (i.e., there is a head, body, and tail prion for each of the red, green, and blue POX strains). To build a POX that can clone, the player must assemble a POX from all clone prion sections. Once assembled, the player will be presented with an option of cloning another POX within the incubator. If the player selects the clone option, the POX may be used to clone another POX. When a POX is cloned, all details of that POX are duplicated. If the POX section being cloned matches the strain of the respective clone section, the hitpoints are not affected. If the cloned section is of a different strain, then the hitpoints are reduced by one-half.

Spy prion strands are also hidden within the research area. Each strain has one spy prion for each POX section. To build a POX that can spy, the player must assemble a POX from all spy prion sections. When a spy POX is constructed, it will be a very weak POX having a low hitpoint rating, such that, in general, it will be beaten easily in combat. When the spy POX loses a battle, the player that built the spy automatically gets 20 typhoid Mary counts, and has the purge and assimilate functionality activated for the duration of the battle clock.

A POX that has been infiltrated by a spy POX will not show any signs that it has been infiltrated. The spy POX mimics a POX that has qualities that are unique to the POX. This makes the POX a desirable candidate to dissect. If the stasis is full of POX, the spy will automatically replace the first POX within the list. When the player attempts to dissect the spy, it causes a viral release within the PCU. After the viral release, the Battle clock is set to neutral.

### Tutorial Description

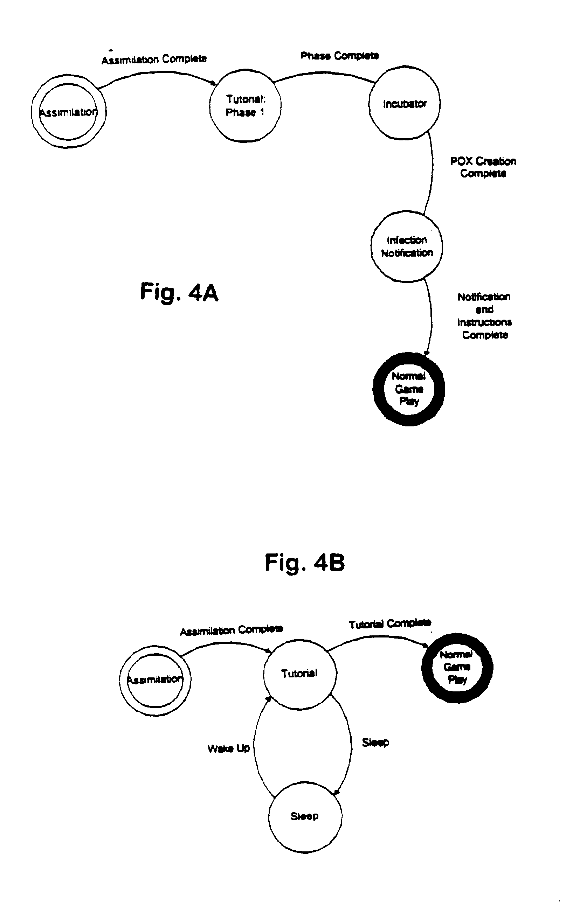

Once the PCU has been assimilated, the system PCU enters the tutorial. The tutorial has two phases: (1) phase one has the player guide the robotic core into level 1 of the research area to recover three inert body parts and a body ability; and (2) phase two has the player enter the incubator to construct two POX. This process is shown in FIG. 4A. If the user turns the game off before entering normal game play state 404, then the user must start the tutorial again from the beginning when the PCU is next powered on as shown in FIG. 4B.

Phase one introduces the player to the levels that the player will face in the research area. The player learns how to control the POX (or robotic core) and to pick up prion strands. In phase one, a player enters level 1 within the research area to collect three inert body parts and a body ability. The ability recovered within the level will be of the same strain as the PCU and will be the lowest rated body part. For the Spino virus, this is the SHOTGUN ability. For the Cycro virus, this is the FIRST STRIKE ability. And for the Plasmo virus, this is the MINOR ABSORB ability.

Upon the completion of phase one, the player is taken to the incubator to construct two POX. After the two POX are created, the tutorial enters phase two and the player is notified that the PCU has just become infected. In addition, an explanation about the battle clock and what to do to defeat the foreign POX is shown to the user. Once complete, the game enters normal game play. However, the PCU does not communicate with other PCUs until the player usurps the infecting POX.

In the event that the player goes into the other areas, the player will always be greeted with a reminder that the time is ticking on the battle clock. This chiding continues until the player finally goes to the gate to battle the POX. The player always wins against the first infecting POX because it is made entirely of inert parts. If the PCU is placed in sleep mode, the player is required to start the whole tutorial over.

### Stasis Lab Overview

The stasis lab or lab is the area where players manipulate POX. The lab is divided into four (4) areas: incubator, stasis, research, and trade.

The incubator is where the player's POX are assembled and stored. The incubator includes four slots that can contain assembled POX. Within the incubator, a player may assemble additional POX, view information on already assembled POX, purge a POX from the lineup, or clone another POX (if the currently selected POX is a clone POX). If a POX is purged, the abilities of the POX are returned to the ability pool.

When a player infects another PCU, the player's PCU captures the POX from the other PCU. A captured POX is held in stasis until the player examines the captured POX. The slots are filled in a first-come, first-served basis. The stasis can hold three POX. If a player captures more POX than the stasis can hold, the newly captured POX is placed in the occupied slot of the POX that was captured the earliest.

A captured POX may be examined, dissected, or purged. When dissected, the player may extract one section from the POX. This extracted section is added to the player's ability inventory. If the player decides that the captured POX has no beneficial sections, the player may purge the captured POX.

A player may have a spy POX captured in stasis. If this occurs, and the player dissects the spy POX, then the player suffers a viral release. After a viral release, the battle clock is set back to the neutral state.

The research area represents the solo game a user plays to safely acquire new abilities. These abilities can only be of the PCU's own strain (color). Within the research area, a player may encounter some foreign POX that contains sections from another PCU; however, the player is not able to acquire sections from the foreign POX. The player's POX cannot be injured in combat within the research area.

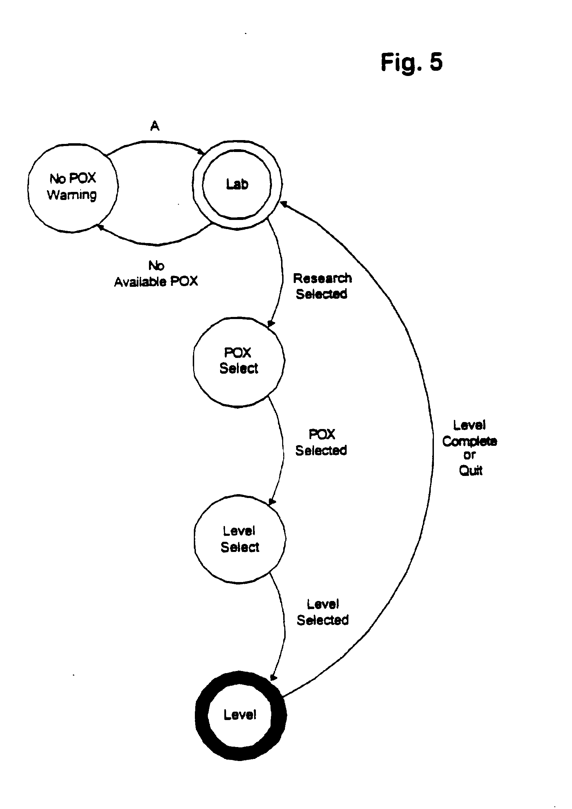

Only POX may enter the research area. If the player has been weakened down to only a robotic core, the player must first construct an inert POX to enter the research area. When entering the research area, a player is prompted for a POX with which to enter. Next, the player is prompted for the level of play. The research area is divided into a series of levels. Each level contains one or more prion strands that must be recovered. Once recovered, that level will be unlocked, allowing the player to return to the level at anytime to re-acquire the prion strand (or variant thereof). A player also is able to enter the next level where a prion strand has not yet been recovered. FIG 5 illustrates the control flow within the POX research area.

At the start of each level, the selected POX is given a hitpoint value that is the average of the hitpoint values of each section of the POX (i.e., the head, body, and tail). This value is used as health in the research area. The player faces environmental hazards in addition to POX that are wandering the level. Failing to navigate environmental hazards or losing to lesser POX causes the player's POX to lose health. If the POX health value is less than or equal to zero, the player is kicked out of the level.

As stated above, the player also faces lesser POX within the level. These POX are used to potentially lessen the health of the player. If the player is victorious in an encounter with a POX, the defeated POX will yield a health power-up to the player. This power-up increases the player's health; however, the health may not exceed the original health value assigned at the beginning of the level.

Levels may be constructed from generic building blocks in order to conserve limited resources. In alternative implementations, known gaming techniques may be employed to design and display the levels.

At the end of every level, the player faces a POX guarding three doors. If a player defeats the guarding POX, the player must choose to enter one of the three doors. The doors may contain another guarding POX or a prion strand. Once the player has passed through the door and accomplished any sub-tasks, the level ends.

Some levels include hidden areas. These hidden areas are identifiable by a characteristic environmental feature that is hard to see at first glance. The hidden areas contain unmarked prion strands for allowing players to build clone or spy POX.

In one implementation, there are save points within levels to allow players to more easily traverse large levels. A save point is identified by an animated save point icon. The player must pass through the icon to trigger the save point.

Each level can employ one or more of various themes. For example, one level can be a pushing level where the player must push rocks or other environmental pieces around in order to traverse a maze. If pieces are pushed in the wrong direction, the user may become unable to complete the level and may need to start over from the beginning.

Another theme is the laser level, where hazardous laser beams are shot across walkways, forcing the player to accurately time moves. Levels also may contain teleports that allow the user to move from one location within the level to another location. Finally, a level may contain environmental moves that force the user to navigate through treacherous pathways to reach the POX guarding the final gate. Many additional styles and formats of levels will be apparent to one of ordinary skill in the art.

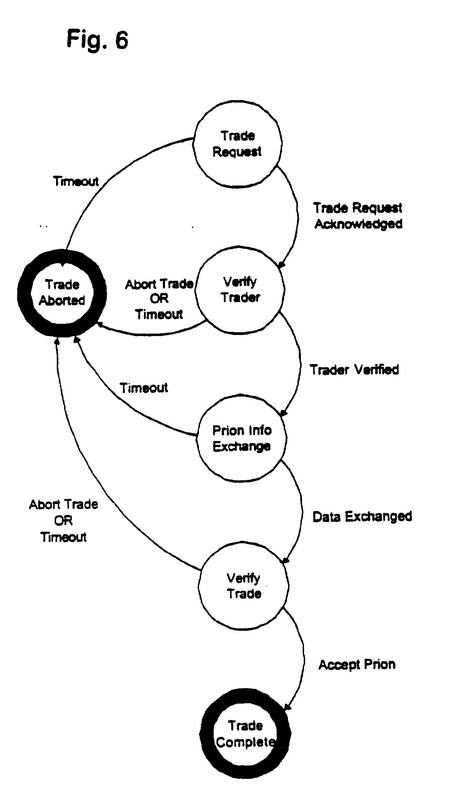

In the trade area of the stasis lab, players may trade POX abilities amongst one another as described in FIG. 6. To do so, two players must establish a link between them to initiate the exchange. In one implementation, a user wishing to initiate a trade enters the trade area of the stasis lab and selects a prion to be traded. A communication is transmitted to other users. A user wishing to trade sends back information to verify trader (step 602). Both players involved in the potential trade identify the prion they are willing to exchange. If both players agree to the trade, then it is confirmed and accomplished. Otherwise, it is aborted.

### Gate Overview

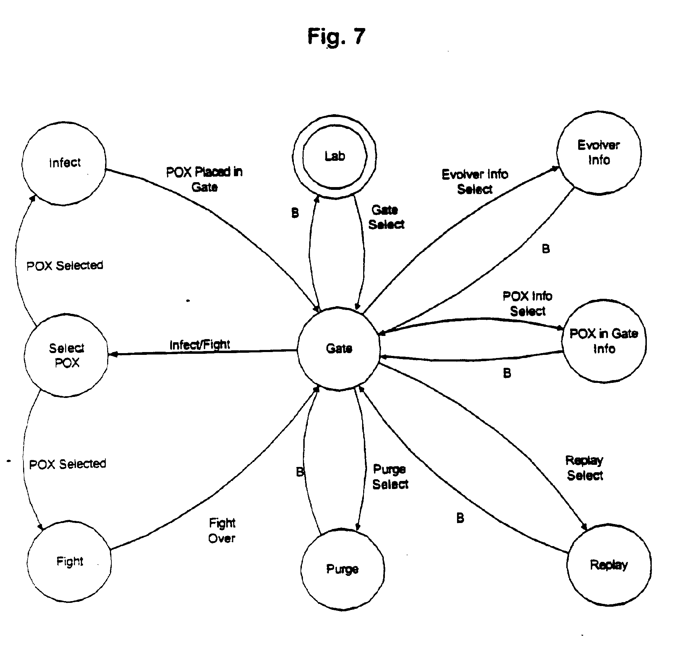

The gate is the PCU's gateway to the outside world. It is this portal that allows the PCU to infect or be infected by foreign POX. The POX that is placed in the gate acts as a gatekeeper to the PCU. Without it, a foreign POX can readily infect the PCU. In the gate, the player may initiate an infection, replay the last combat the PCU has endured, display information on the current POX in the gate, display information about the PCU, or purge an infection. FIG. 7 is a state diagram showing these operations within the gate.

If the user selects to see PCU info within the gate, the PCU displays essential information about the PCU in a scrollable area as described in Table 3.

**Table 3**

| **Item** | **Description** |
|---|---|
| Owner Name | Name |
| DNA Tag | Owner ID |
| Lifetime Victory Count | Pure Victory Counter |
| Highest Daily Victory Count | Highest Daily Victory Count Achieved |
| Highest Typhoid Mary Count | Highest Typhoid Mary Count Achieved |
| Daily Victory Count | Daily Victory Counter |
| Typhoid Mary Count | Daily Typhoid Mary Counter |
| State | State the PCU is in (infected, etc.) |
| Battle Clock | Battle Clock Timer |

Within the gate, the player also can request information about the POX currently within the gate. When a user requests gate POX info, the PCU displays information as described in Table 4.

**Table 4**

| **Item** | **Description** |
|---|---|
| POX Name | Name of the POX |
| POX DNA Tag | Owner ID of POX |
| Head Type | Type of Head |
| Head HP | Head Hitpoints |
| Head DNA Tag | Owner ID of Head |
| Body Type | Type of Body |
| Body HP | Body Hitpoints |
| Body DNA Tag | Owner ID of Body |
| Tail Type | Type of Tail |
| Tail HP | Tail Hitpoints |
| Tail DNA Tag | Owner ID of Tail |
| Rating | Overall Rating of POX |

Next, the player can choose to infect or transmit a POX to other units. When the PCU is in an uninfected state, the player may place a POX into the gate to infect other PCUs. When the battle clock is OFF, the player must place a POX into the gate. Once a POX is in the gate, the PCU attempts to infect other units for ten minutes. If the battle clock is ON, selecting infect simply resets the infect time back to ten minutes.

When the PCU is in an infected state, the player must eventually try to rid the infecting POX. A player may attempt to confront the foreign POX directly. To do this, the player selects fight. Fight replaces infect as an option when the PCU is in an infected state. When the player tries to fight the other POX, the player is allowed to select the POX to fight against the infector.

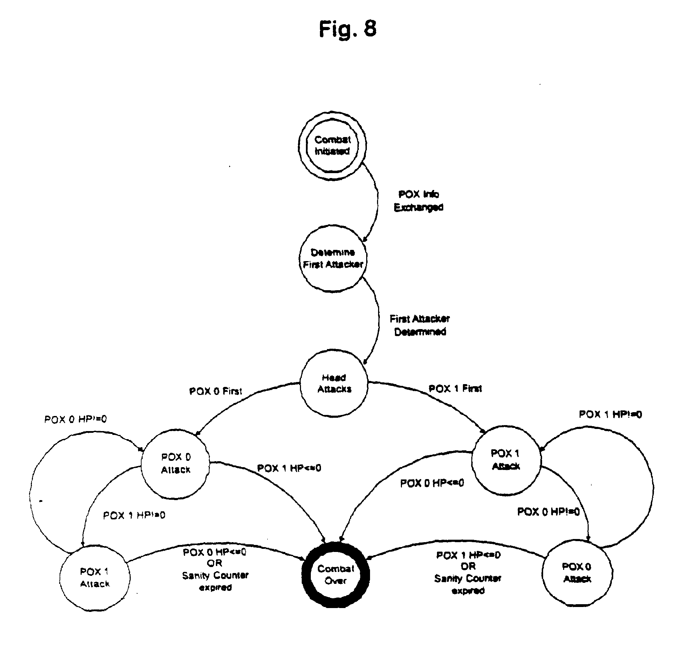

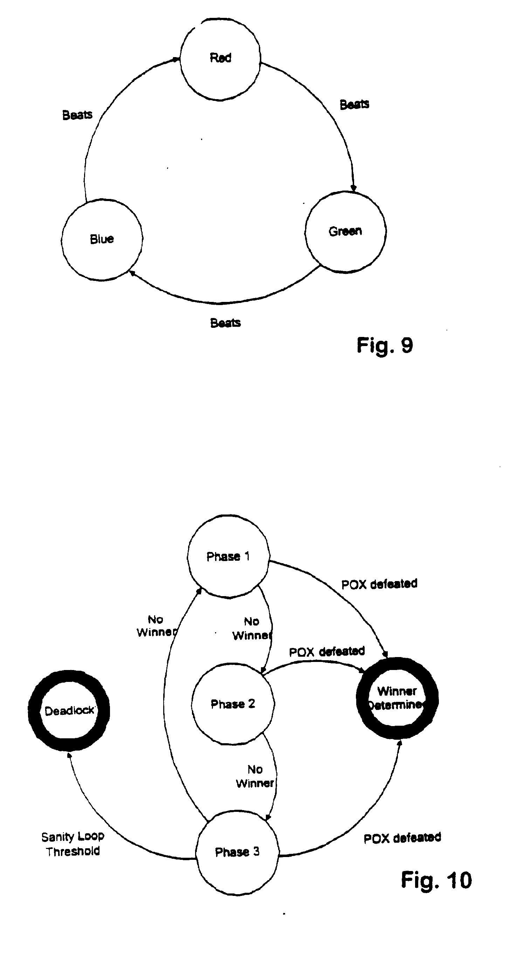

As shown in Fig 8, fight sequences are divided into the following phases: first attacker determination, head attack, and round attacks. The first step in a fight is to determine which POX will attack first. This is important since it is possible for a POX to be beaten during the head attack. The first attack determination guarantees that the battle result will be proper and determinative. First attack is determined by the head strain and/or type as shown in FIG. 9. For example, the blue strain starts before the red strain, but after the green strain and the red strain starts before the green strain. If the head type of one of the POX is ME FIRST, that POX is automatically the first attacker. However, if there is a deadlock, the initiator of the battle begins first.

In summary, the first attacker determination is made as follows: (1) ME FIRST determination; (2) strain check; and (3) initiator.

Before the round attacks, each POX's head performs an ability check. This ability check cannot be blocked by standard defenses and will automatically hit. The question is whether or not the ability of the head is activated. The remaining fight is broken into rounds. There are three parts to a round attack. These parts are called Phases. Each POX has an RNA matrix that determines the attack sequence and blocking sequence applied during each of these phases. FIG. 10 shows the sequence followed during the round attacks.

The attack sequence of a phase determines the part of the POX that is used to attack the opponent. It also specifies the targeted part of the opponent POX. This is matched against the blocking sequence of the opponent. This blocking sequence determines what part the POX is blocking against. Unless an overriding special ability is used, a successful block nullifies the attack. There are three potential results from a round attack: continuation of the fight, a winning POX, or deadlock. A deadlock is achieved when a sanity loop threshold counter is reached. The battle must be partially played out to ensure that latent activation triggers are not activated that would otherwise result in an end to the fight.

Each phase is broken into two parts: the first attacker performs an attack and then the other POX attacks. If the opponent does not end up with a hitpoint value less than or equal to zero, the opponent gets to attack the first attacker in a likewise manner. The next phase will ensue provided that the first attacker survives the counterattack. If the POX both survives the third phase, the phase count is reset to the first phase. Note that at the end of a round, the head ability checks do not occur again. This is only done at the beginning of combat.

The last POX battle is retained for review. A player may replay only if a battle has occurred. Once initiated, the battle sequence must continue until it is complete. At the end of the battle, the results are displayed. The player must press the "A" button to return to the gate.

The replay uses both screen windows. The detail window is used to show the attack and the attack effect. The view window displays the POX hitpoints and a description of what is occurring.

When the PCU is in an infected state, the player must eventually try and rid the PCU of the infecting POX. If the player has enough currency, the player may purge the foreign POX from the PCU. There are three levels of purge that are available to the user. Each purge type requires a certain currency, as set forth in Table 5. The value of the currency is dependent upon the overall rating of the infecting POX.

**Table 5**

| **Purge Type** | **Description** | **Cost** |
|---|---|---|
| Purge With Effect | Purging POX with damaging effects | 10 |
| Purge Without Effect | Purging POX without damaging effects | 100 |
| Purge and Assimilate | Purging POX and place POX in Stasis | 500 |

### User Interface

The user interface includes a display panel and several buttons as discussed above. The buttons (or switches) perform the functions set forth in Table 6.

**Table 6**

| **ID** | **Name** | **Function** |
|---|---|---|
| 101 | 4-Way Directional Pad | Move/Menu Selection |
| 102 | ON/OFF | Turn Unit On/Off |
| 103 | Sound | Sound |
| 104 | Pause | Pause |
| 105 | A | Select/Menu Forward |
| 106 | B | Select/Menu Backward |

In one implementation, the ON/OFF button 102 includes a light, such as an LED, placed underneath the button. The light illuminates when the button is pressed to indicate that the unit is operational.

The handheld unit 100 uses wireless transmissions to communicate with other handheld units 100. In the implementation shown, the handheld unit communicates using radio frequency technology (RF).

The POX user interface primarily uses the view window (45 x 30 pixels) to display the menu information. In addition, the directional pad and the A and B buttons are used to traverse menus, when necessary. The convention for menu traversal is to use the A button for forward and the B button to return to the previous screen.

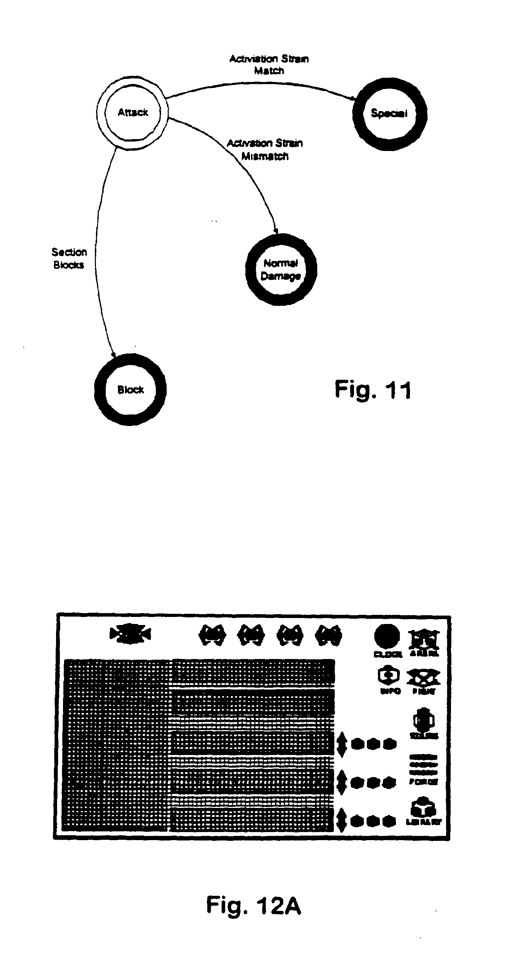

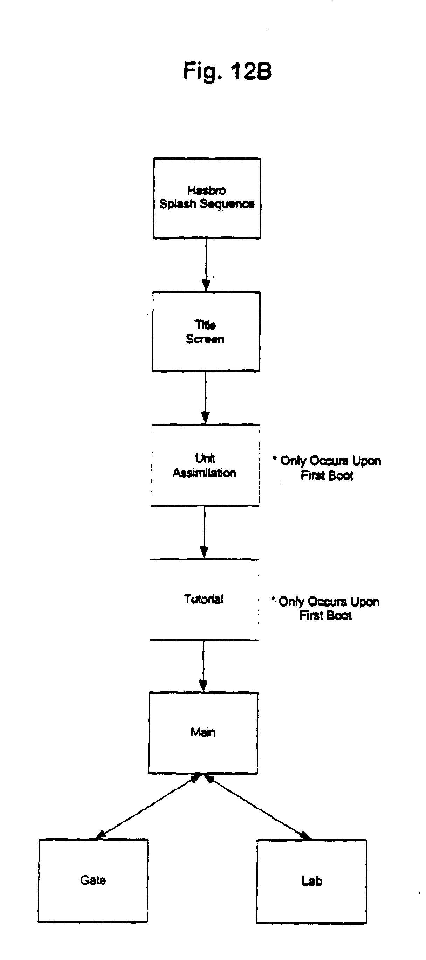

At startup or upon awakening of the PCU from a non-infected state, the game follows the user interface roughly illustrated in FIG. 12B. If the PCU has been awakened and the PCU is infected, the system immediately displays the main screen. This is done to minimize the delay before the player is able to tend to the infected PCU.

Block 1200 is a company splash sequence that is displayed as an animation of a corporation logo. In addition, the names of the members of the design team are displayed.

Block 1201 is a title screen display sequence. A static POX screen used to identify the game is displayed. Each type of PCU has a different title screen identifying the type of PCU that a player owns. The screen is also displayed when an asleep unit is awakened.

Block 1202 illustrates PCU assimilation. This sequence is shown when the PCU is powered up for the first time. The PCU must be initially assimilated to the user's DNA sequencing. To complete the sequencing process, the user must name the PCU. In one implementation, the user also much enter a location code to identify the location where the user resides. This helps players track their POX around the world. Location information also can be obtained when users register their POX for web access. The owner is not able to change any of this initial information unless all batteries are removed from the PCU and then replaced. This clears the RAM on the PCU, to create an unassimilated PCU.

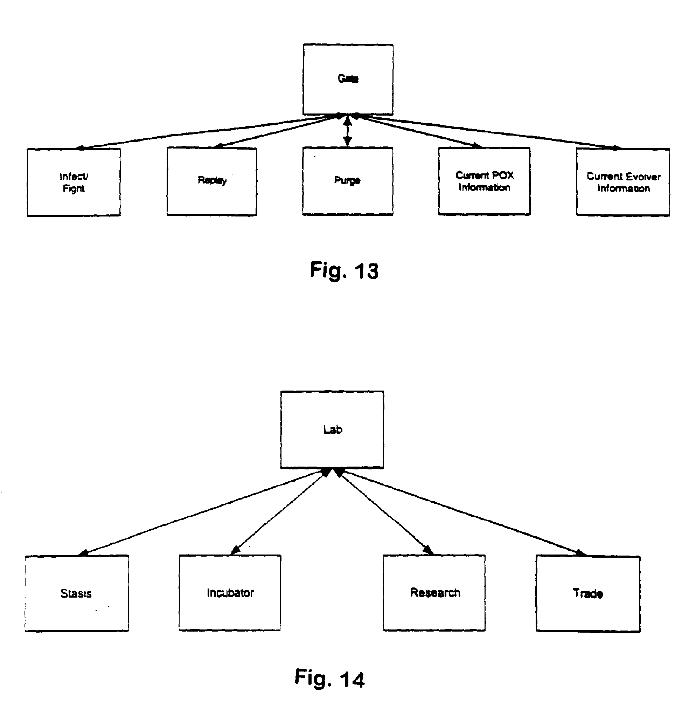

The main screen 1204 is used to switch between modes. The player can select the gate mode or the lab mode and the appropriate screens are shown. The gate area is used to play the multi-player portion of the game. The items in the gate menu allow the player to attempt to transmit other PCUs or to view information about the PCU or the current POX in the gate. FIG. 13 identifies the options available within the gate user interface. Note that replay is not an available option if the current POX in the gate has not had a battle since being placed in the gate.

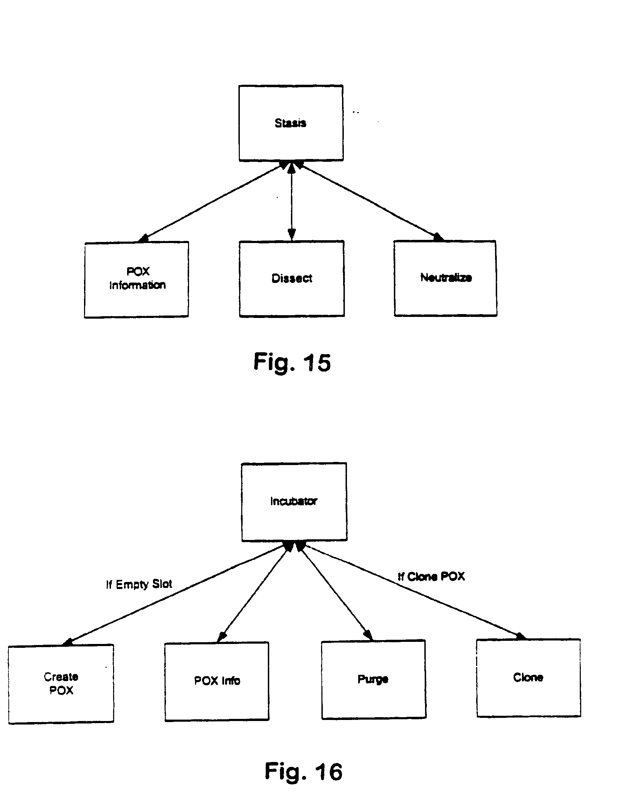

The lab area is used to gather POX components, dissect captured POX, build POX lineups, and trade POX components. The lab user interface is shown in FIG. 14. When a player captures another player's POX, the captured POX is placed in the stasis area. Stasis is only available when there are captured POX. The stasis menu, shown in FIG. 15, allows players to view information on a captured POX, dissect a captured POX to extract an ability, or neutralize to purge a POX.

The Incubator allows players to create and manage their POX. Essentially, the incubator is a list of available POX. A list entry will either be the name of a POX occupying that slot, or EMPTY. There are no gaps within the incubator. If a POX is purged or moved to the gate, creating a gap in the list, all other POX are shifted up. A player is not allowed to scroll through the slots. If the player presses A, the player is allowed to create a POX. This POX is used either to enter research or to guard the gate. If the incubator is empty, then the user can only choose to create POX.

When there is at least one POX, the system displays the incubator user interface as outlined in FIG. 16. Players can create a POX, view POX information, purge the currently selected POX, or clone a POX (if the POX is a clone POX). If the POX is purged, the abilities are returned to the ability pool. During battle mode, however, a player loses an anti-POX attempt when another POX is created to replace the purged POX.

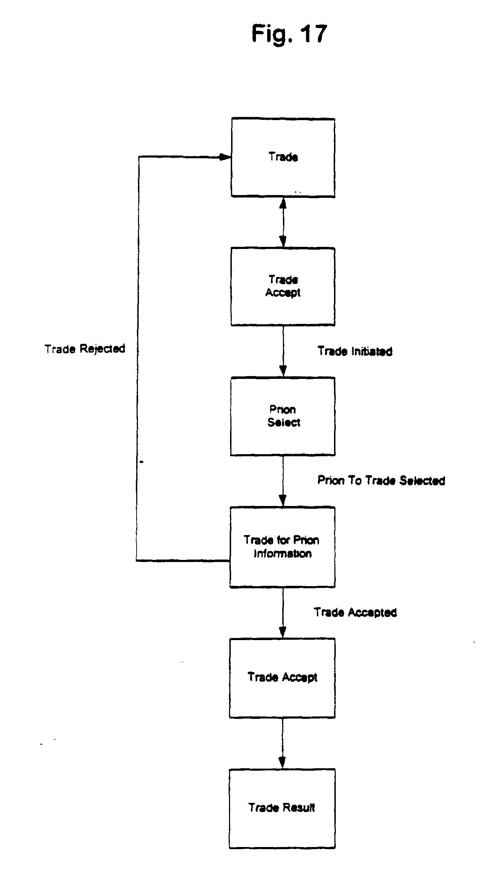

Research is a solo game that the player uses to find additional abilities. Only abilities that are of the same strain as the PCU are accessible to the player. Trade allows two players to exchange ability prion strands. The trade user interface is described in FIG. 17.

When the PCU has remained idle for a predetermined time period, the unit enters sleep mode. In sleep mode, the unit turns off the display; while continuing to attempt to establish communication with other PCUs. This allows sleeping units to become infected. When the unit is awakened, the unit displays the title screen. After that, the unit either resumes at the last active menu screen, or is taken to the last save point within research. In the event that the unit was awakened during the tutorial, however, the game resumes where it was when the unit was placed in sleep mode.

POX supports several hidden user interface screens that are used to facilitate diagnostics, to gather statistical information, to update the product, and at points of sales. These are accessed either by special key sequences or by a specific command sequence sent through a communications port (either wireless or wired). Most of the hidden user interface screens do not respond to button presses; they are active for a defined period of time. When a hidden screen is complete, the PCU automatically returns to the company splash screen.

### Communications Protocol

There are many systems that may be employed to provide apparent simultaneous transmitting and receiving of data including frequency division duplex (FDD) and time division duplex (TDD).

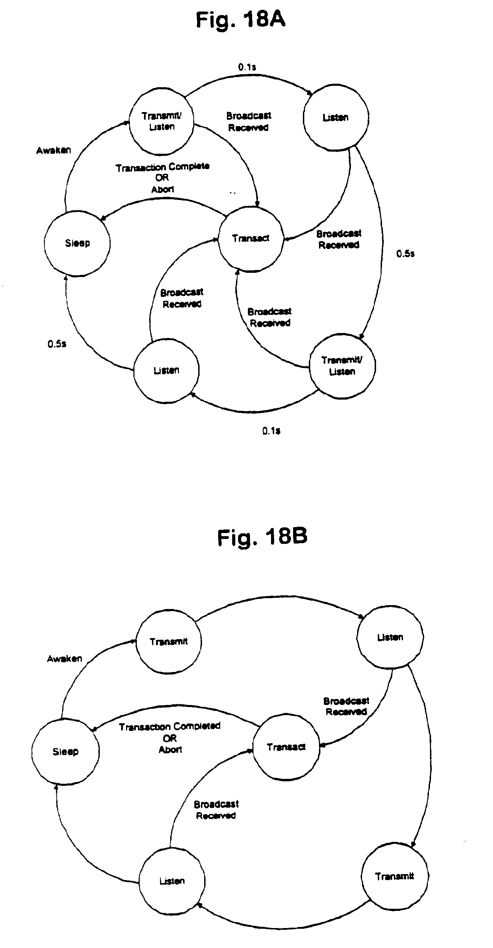

Frequency division duplex systems use different frequencies to allow simultaneous transmission and reception of data. A possible system to employ would be to cycle between a state of sleep, transmit/listen, and listen. Assuming a fairly fast closing rate of 8mph (∼12 fps) and a range of 20 feet, there will be approximately 1.67 seconds to establish communication. This interval can be sliced into sections of transmit/listen with a 0.5 second listen phase to provide ample time to complete the necessary communication such as described in FIG 18A.

Time division duplex may use two non-overlapping time slots for transmitting and receiving data. This system must properly coordinate the time slot periods to accomplish successful communications. Usage of TDD reduces system costs without incurring the typical penalty of TDD used in real-time systems such as voice. One TDD implementation cycles between sleep, transmit, and listen states such as described in FIG. 18B.

There is a possibility that two or more units may interfere with each other's transmissions. The probability of such a clash increases when there is a rigidly defined transmit/receive schedule. Pseudo-random numbers keyed off of the unique identifier of the unit may be used to provide variations in the transmit/receive periods.

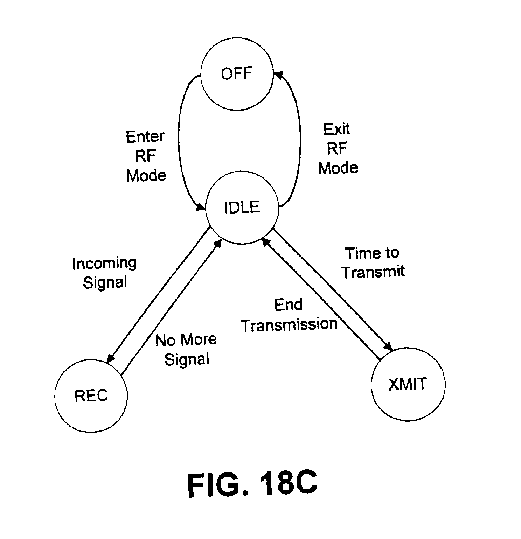

Referring to FIG. 18C, a bi-simplex communication protocol also may be used in place of the communication protocols discussed above with respect to FIGS. 18A and 18B. The bi-simplex communication protocol may use a single frequency for transmitting and receiving data. This implementation includes data integrity checking; however, data forward error correction is not used. The packet data payload in this implementation is 64 bytes with a 2-byte cyclic redundancy check (CRC). In the United States, data may be transmitted at any frequency allowed by the law, for example, data may be transmitted at 315 MHz according to 47 C.F.R. §§ 15.231(a)-(e). Any frequency may be used and the choice of frequency may be dependent on the laws and regulations of a target country. For example in Europe, data may be transmitted at 433 MHz. In this implementation, communications are open-ended with no handshaking, acknowledgement, or retransmission requests.

The communication protocol shown in FIG 18C may be implemented using a 10 second minimum period between packet transmissions and a maximum packet length of 333 ms. The calculations necessary to resolve combat take substantially less time than data communications. Thus, for example, combat resolution may take on the order of one-thousandth of the time it takes to receive a data packet. The data transmission rate using this protocol is 1.17 Kbps when data that is Manchester encoded using On-Off Keying (OOK).

As shown in FIG. 18C, there are four basic modes of radio frequency (RF) operation: off, idle, receive, and transmit. The off mode is used when the unit is not in the RF mode. The receiver and transmitter are not energized when in the off mode. The idle mode is the default mode when the RF mode is activated, but the PCU is not transmitting or receiving data.

The PCU enters the receive mode when the RF mode is activated and a signal is detected of sufficient strength to cause the onboard super-regenerative receiver to oscillate. As long as this external stimulus exists, the PCU remains in the receive mode and provides a serial data stream representing the received data to the PCU's processor. Assuming the received data is a valid POX data packet with a valid CRC, the appropriate action will be taken (i.e., declare winner; or wait until the next transmission, and declare loser). If there is a bad CRC, or if there is a spurious signal in the receive band, the received data are ignored.

The PCU enters the transmit mode if the system needs to transmit a data packet. Transmissions are allowed if at least 10 seconds have elapsed since the last transmission and there is currently no information being received. If at least 10 seconds have elapsed and there is reception activity, the PCU unit waits a random amount of time before sampling the receive channel again. In this way, multiple POX units waiting to transmit data will not all instantly jam the channel once it is free. In the transmission mode, the receiver function is disabled (powered off). Once the transmission data stream is started, it will not be interrupted, and will not be re-transmitted for at least another 10 seconds. This protocol does not require collision detection or retransmit requests.

The following table describes an exemplary handshaking communication protocol that may be used to exchange information between PCUs.

**Table 7**

| **POX "A"** | **POX "B"** |
|---|---|
| "I am POX A" | |
| | "Hello, POX A. I am POX B." |
| "POX A is stronger than POX B." | |
| | "I agree. I will put POX A in my gate now." |
| "Thank you. I will put POX B in my lab now." | |

This handshaking protocol may be replaced by a non-handshaking version such as that described in Table 8. This communication protocol only requires that each POX device send one message.

**Table 8**

| | |
|---|---|
| **"I am POX A"** | POX A is stronger than POX B. I will have to put POX A in my gate after my next transmit. |
| | **"I am POX B."** |
| Put POX B into my lab. Sound victory tone. | Load POX A into the gate. Sound defeat tone. |
| **"I am POX A"** | |
| | **"I am POX A"** |

In some implementations, data may be repeated four times per packet to provide ample bandwidth for OOK or FSK data transmission of NRZ-I data. Other data formats, such as Manchester encoding, may be used to make a more robust channel without substantially adding to the data rate.

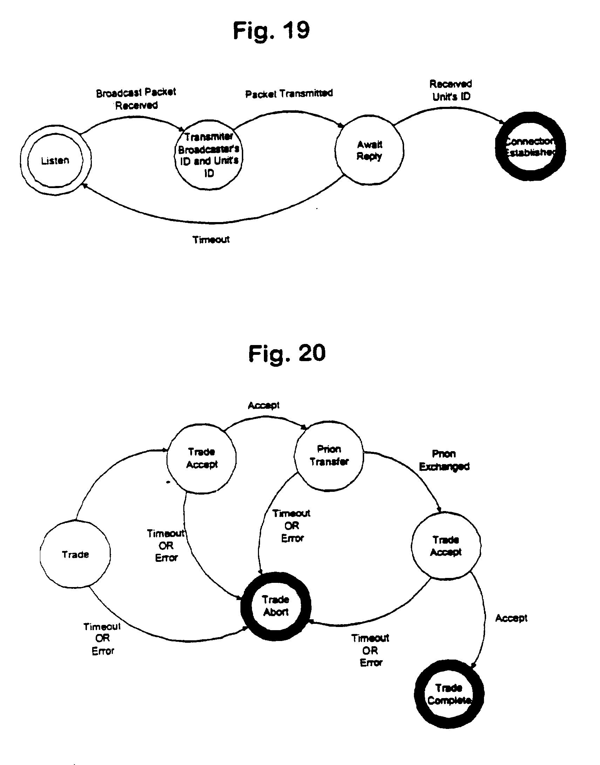

Once completed, any communication sequence may occur. For example, in some implementations including handshaking, communications may be verified using redundant data passing to verify that the transaction has occurred. In addition, forward error correction codes (FEC) may be used to help verify the integrity of data transmission. FIG. 19 is a state diagram describing communication handshaking according to one implementation.

The RF unit may be turned off by using the ON/OFF button 107. This puts the system into compliance with FAA regulations, since use of all radios, cell phones, and AM/FM radios is prohibited during commercial aircraft taxi, takeoff, and landing.

Communication between handheld units uses command packets. A command packet is fixed length and contains a unique identifier of the sender, the command code, and additional data that are code dependent as shown in Table 9.

**Table 9**

| **Element** | **Description** | **Size (in bits)** |
|---|---|---|
| Unique Identifier | Sender of Packet | 32 |
| Command Code | Command Code | 8 |
| Data 0 | Code Dependant Data | 32 |
| Data 1 | Code Dependant Data | 32 |

One implementation provides five basic communication modes: sleep, sniff, receive, check channel, and transmit. The sleep mode is used to minimize battery drain. CPU and RF transmit sections are powered down during this time. Periodically, the POX unit transfers to the sniff mode (6 times per second or more), or the check channel mode (no more than once every 10 seconds).

The sniff mode is used to sample the channel to see if another POX is transmitting. If transmission is not detected, the POX goes back to the sleep mode. If a transmission is detected, the POX transitions to the receive mode. In this implementation, sniff cycles are timed to ensure a high probability of detection of a transmitted POX packet. This can be adjusted by using sync/framing structures in the packet, or by multiple transmissions of the same data in a packet. For a 333 ms packet size, sniffing more frequently than 3 Hz provides a high probability of detection. In this implementation, a 6 Hz sniff rate is used to guarantee that a receiver will always catch at least 50% of a data packet. A 9 Hz sniff rate can be used to guarantee that 67% of the data packet is available for receiver processing.

The receive mode is activated when sniff mode detects another POX unit transmitting. As noted above, frequency of the sniff mode determines how much of the data packet is guaranteed to be available for processing. Assuming a minimum sniff rate of 6 Hz, fully half of the data packet can be missed. Therefore, the latter half of the transmit packet must contain 100% of the data payload. The receive mode accepts raw serial data from the RF receiver, unpacks it into bytes, checks data integrity (via CRC or similar techniques), and, if the data is OK, stores the received data in a receive buffer. Once a data packet has been read successfully, the POX stays in the receive mode until the end of the transmission by the other POX. After that, the POX unit goes into sleep mode. There is no indication of a data or channel failure in the event of corrupted data.

The check channel mode is entered when the POX unit wants to transmit. The unit first samples the channel to see if another POX is transmitting. If the channel is clear, the transmit mode is entered immediately. If the channel is busy, the POX unit waits until the channel is clear, then further delays for a certain amount of time that is determined by a pseudo-random delay. The duration of this delay is in increments of 10 ms, with a minimum value of 1, and a maximum of 32. After the delay, the POX unit samples the channel again. If the channel is open, the system transitions to the transmit mode. Otherwise, a new pseudo-random delay is calculated. Once the channel is clear, the pseudo-random delay time is started, and the cycle repeats. There is no mechanism to guarantee access to the channel in the presence of more than 30 POX units; however, readers will appreciate that any conventional network technology can be used to support more units. For example, POX units could employ exponential back-off upon detection of a collision in a manner analogous to what is done in Ethernet.

The transmit mode is entered when the check channel mode indicates a clear channel. Transmit mode formats the data packet, including sync bits, check bits, and redundant data, and passes this information serially to the RF transmitter. There is no check for a successful transmission, and the POX unit returns to sleep mode once the transmit mode is finished.

In another implementation, a modified communication protocol is used to provide for near-instant response. By changing the transmit period to over 10 seconds, a unit which has been quiescent for more than 10 seconds can respond instantly. For example, a 15-second interval can be used. The check channel state is entered (1) after a timeout of 15 seconds in the sleep mode; (2) when exiting the receive mode and the timeout has more than 10 seconds; or when there has been a packet received and the timeout clock hits 10 seconds.

Handheld units use communications to handle a few communication functions. These functions allow the POX unit to battle, trade, and to handle upgrade/point of sales. In one implementation, communication functions use a handshake to establish a connection. A specific handshake for each instruction can be used to more easily filter out communications that should be ignored. For instance, if a unit is not interested in trading, the unit can simply ignore all trade packets. The unit will not need to first establish a connection, and then determine if the instruction is a trade request.

Trades are slightly complicated in that each person must verify that a trade is occurring with the proper person. Since specific command packets are used for trade handshaking, errant communication can be eliminated with little difficulty. Once the proper person has been connected, prion information is exchanged. After this, each player needs to verify whether the trade is satisfactory. If it is not, the trade is aborted. A completed transaction only occurs when both parties send and receive their validation of the event. This communication is illustrated in FIG. 20.

In addition, communication uses a master/slave relationship. The master is the initiator of the communication. Data are exchanged by the master transmitting a packet. The master then awaits a return packet from the slave. When the master receives this packet, the exchange is complete. This exchange is the basis for all communications according to one implementation.

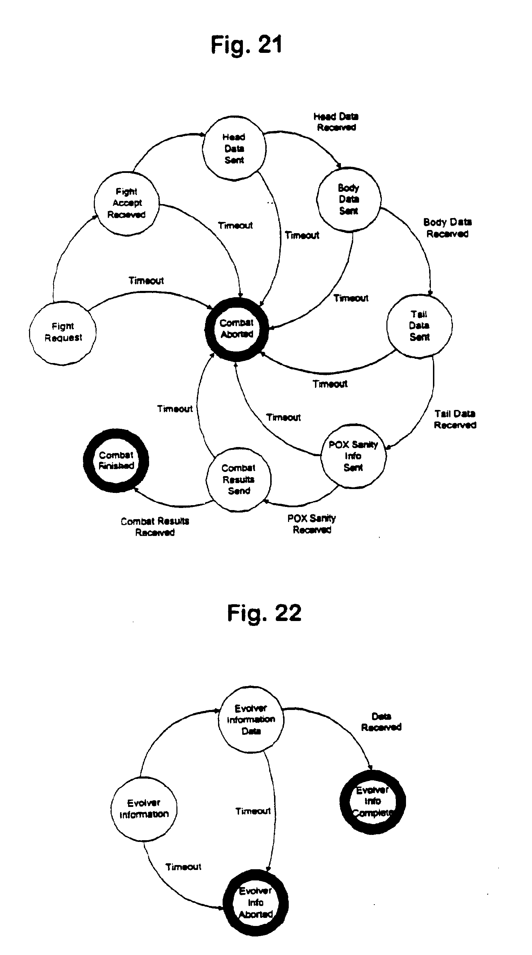

Combat communication entails establishing a handshake and then exchanging data. Due to the amount of data that is required for combat, the data are transferred in several stages, with each stage identified by a different command packet. Combat communication is described in FIG. 21.

PCU information extracts statistical data from the device. It is used primarily by non-players, such as by technicians or by employees of participating retail stores (since the command can not be issued natively from a PCU). The originator of the command most likely will use a base station. Once issued, the receiver transmits information. This functionality is described in FIG. 22. Each POX PCU maintains two sets of statistical information. One set of data is used to help tune the POX game. This includes details such as the percentage of time the PCU is the master in communications. The second set of data is used to record statistical information that may be used to analyze the demographics of a user and to gather results that may be used to post owner information on the web.

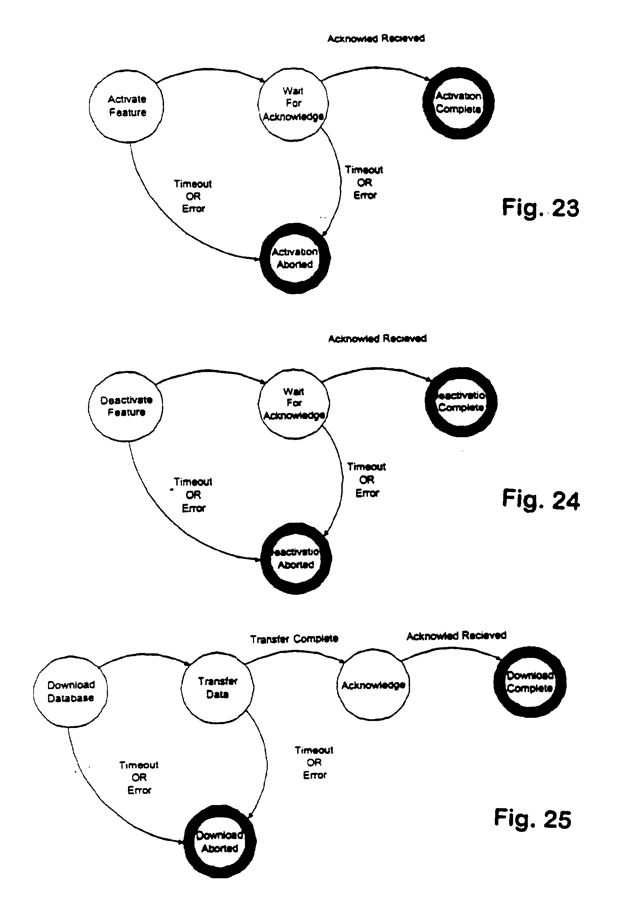

Feature activation is a non-PCU command that permits third parties to activate additional features such as hidden prions or other areas of the game. A security system verifying a valid transaction recipient is used to prevent unauthorized users from enabling these additional features. This functionality is described in FIG. 23. Feature activation can be used in marketing and partnership campaigns. For example, it could be used to allow a retail store to enable additional features if customers bring their PCU to the retail store.

Similarly, feature deactivation can be performed using a non-PCU command. It can be used by third parties to deactivate hidden prions or other areas of the game. A security system is also used to verify a valid transaction recipient. This functionality is shown in FIG. 24.

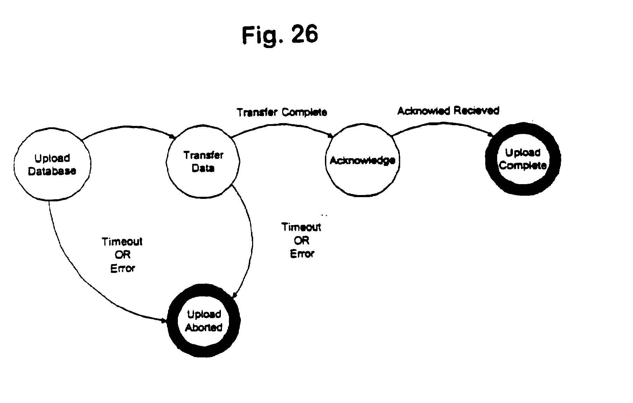

FIGS. 25 and 26 illustrate two additional non-PCU command codes that provide a mechanism for uploading and/or downloading the POX database. This provides an upgrade path so that individual POX units can be loaded with a newer version of the POX software or with another game.

Feature activation and database upload commands provide two separate upgrade paths. The first type is the enabling of hidden ability sections within the PCU. This can be used for promotional use at toy stores. The second path provides a method for upgrading to later versions of POX. This allows players to upload their POX incubators into a more state of the art POX incubator (i.e., a new version of POX). Newer versions can be determined by the exchange of version identifiers. Additionally, a point of sales model can be incorporated using this power communications protocol.

The PCU identifier function causes the PCU to display the identifier of the unit. This command is meant to be issued from a remote device and is used for point of sales or upgrade path implementation. Upon the receipt of this command, any receiving unit displays the PCU identifier. This is displayed for thirty seconds. During this period of time, the unit is shut down from any game play.

Finally, the test command is used to invoke the unit into an RF test mode. This allows users to verify that the PCU's RF unit is functioning properly.

The communication codes are summarized in Table 10.

**Table 10**

| **Command Code** | **Mnemonic** | **Description** |
|---|---|---|
| Fight Initiate | 1 | Broadcast PCU wants to fight |
| Fight Accept | 2 | Reply to Fight Request |
| Head Data | 3 | POX Head Data |
| Body Data | 4 | POX Body Data |
| Tail Data | 5 | POX Tail Data |
| POX Sanity Data | 6 | POX Sanity Data to verify POX |
| Combat Result | 7 | Result of combat (for verification) |
| Send PCU Info | 8 | Send out PCU info |
| Trade | 9 | Trade prion request |
| Trade Accept | 10 | Accept a Trade Request |
| Trade Prion Ino | 11 | Information on the prion to trade |
| Trade Verify | 12 | Result of prion transaction |
| PCU Info Packet | 13 | PCU info |
| Display PCU Identifier | 14 | Display PCU identifier |
| Activate Feature | 15 | Activate hidden feature |
| Deactivate Feature | 16 | Deactivate hidden feature |
| Download Database | 17 | Download PCU POX database |
| Upload Database | 18 | Upload PCU POX database |
| Acknowledge | 19 | Acknowledge Request |
| Error | 20 | Error in request |
| Test | 21 | Test command |

In other implementations, any other communications protocol can be used. For example, the units can use TCP/IP or CDPD to initialize connections and to exchange data.

### Hardware Implementation

The handheld unit 100, shown in FIG. 1, includes a display 108 that is 1" x 2" in area. The display is further divided into two sections, as shown in FIG. 5: a 40 pixel x 44 pixel detail window area used to display POX and other details that need a higher resolution; and a 42 pixel x 30 pixel view window area used to display text information, the levels, and other details that do not need a higher resolution display.

One implementation is based on the HE83760 chipset having 2 Megabytes of ROM storage available. As shown in Table 11, the ROM is divided between two regions: program ROM; and data ROM. Note that the program ROM can store data if the data ROM portion is inadequate.

**Table 11**

| **Section** | **ROM Size** |
|---|---|
| Program | ∼64 Kilobytes |
| Data | ∼1.9 Megabytes |

In one implementation, the handheld device is powered by three AAA lithium rechargeable batteries. However, any other power source could be used.

The HE83760 has 16K bytes of addressable RAM. The RAM is divided into 64 256-byte pages. Not all of the pages are useable to store program data, since some pages are allocated for LCD buffer space. Table 12 lists the RAM page usage.

**Table 12**

| **Page** | **Usage** |
|---|---|
| 0 | Stack |
| 1 | LCD |
| 2 | LCD |
| 3-63 | User |

Units need to have identifiers to indicate version, unit type, and owner ids. The program will use the pseudo unique identifiers to identify the unit. These identifiers will be 32-bit values that will be generated from a number that is derived by an internal 32-bit software counter, an internal timer, and the name chosen by the player to identify the unit.

The player may use the web site for the product to acquire a unique identifier. This identifier is issued from the web site, and is used to track the POX. This identifier will be distinguished by having the uppermost bit set within the identifier. Table 13 illustrates one example of identifiers and their associated sizes.

**Table 13**

| **Identifier** | **Minimum Size** |
|---|---|
| Version | 1 byte |
| Unit | 1 byte |
| Owner | 3 bytes |

The HE83760 supports up to 3072 LCD segments. The POX unit is divided into three graphical divisions. There is a high resolution detail window, a lower resolution view window, and an icon set. Table 14 details usage of the 3072 LCD segments.

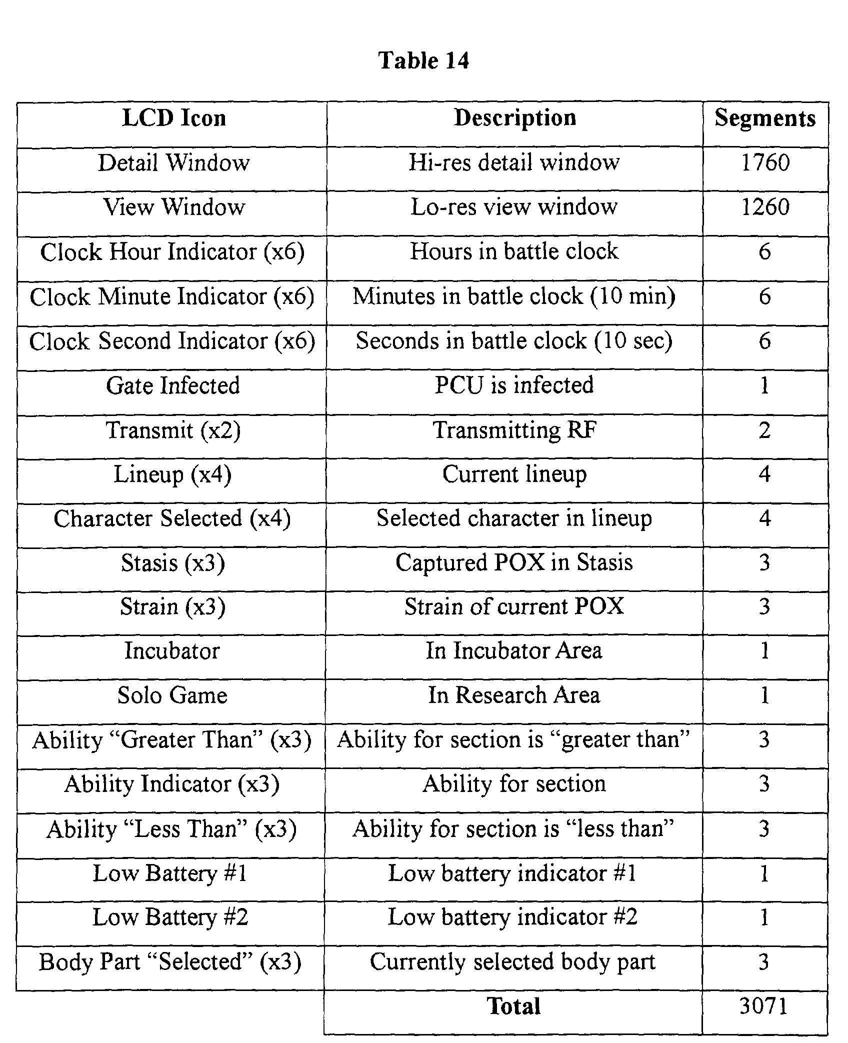

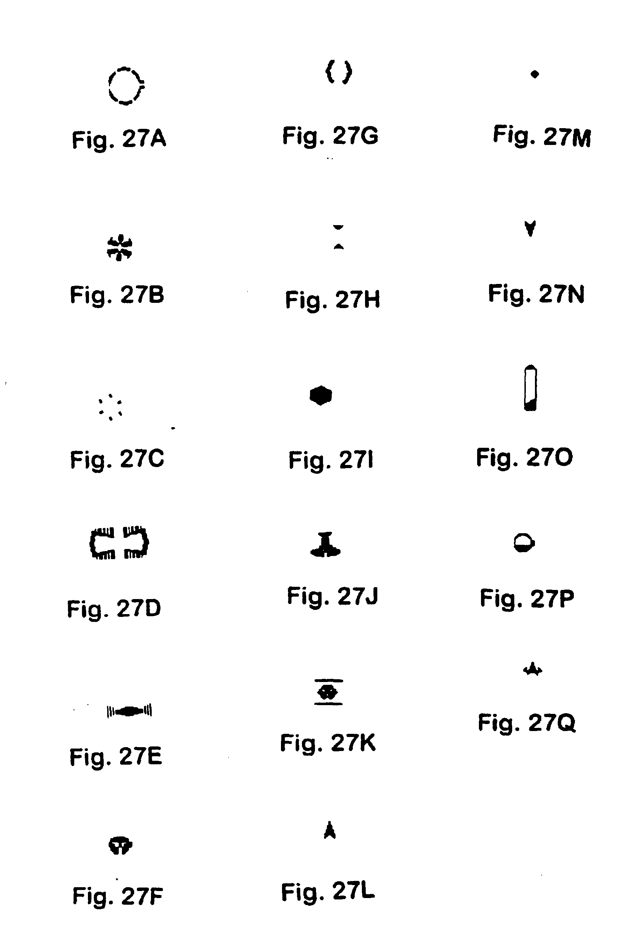

There are several icons used in conjunction with the detail and view windows to facilitate game play. These icons are shown in FIGS. 27A-27Q.

FIGS. 27A-27C are icons used to display the battle clock. FIG. 27A is the hour icon consisting of six segments, each segment representing one hour of the battle clock. There are six clock hour indicators stored. The first contains only the uppermost segment shown in FIG 27A. The second, representing the next hour of battle, has the uppermost and upper right segments on. The hours are represented in order by the segments along the clockwise direction. When in the sixth hour of battle, all segments are on. In other words, there are six clock hour icons stored in the system memory. The first has only the uppermost segment activated, the second has the uppermost and the upper right segments activated, and so on.

FIGS. 27B and 27C show the clock minute and clock second icons respectively. The clock minute icon and the clock second icon behave in a manner similar add to the clockwise ordering of the clock hour icon shown in FIG. 27A in that they a new segment after each ten minutes or seconds of time elapses on the battle clock.

FIG. 27D shows an icon that is displayed to indicate that the gate has been infected.

FIG 27E shows the transmit icon, which includes two separate images. The first has only the center dot shown in FIG. 27E and the second has the entire image shown in FIG. 27E. The system indicates that it is transmitting data by cycling through three images: (1) a blank image with all segments turned off; (2) the center dot image; and (3) the entire image shown in FIG. 27E.

FIG. 27F is the lineup icon that is used to represent POX within a player's lineup. The lineup selector icon shown in FIG. 27G is used to indicate a POX that has been selected. This icon surrounds the lineup icon shown in FIG 27F.

FIG. 27H indicates that a POX has been captured and placed in stasis. The rightmost icon represents the first POX in stasis.

The strain indicator icon shown in FIG. 27I represents the ability activation strain of the currently selected section. The leftmost icon represents the Red (Spino) variant, the middle represents the Green (Cycro) variant, and the rightmost icon represents the Blue (Plasmo) variant.

FIG. 27J shows the incubator icon. This icon is activated when the player is in the Incubator. FIG. 27K shows the solo game icon. This icon is activated when the player is in the research area.

FIGS. 27L and 27N are the ability greater than and ability less than indicators. These icons are used in conjunction with the ability indicator shown in FIG. 27M to indicate whether the examined section is superior to the strains already possessed by the user. If the section being examined is greater than the same prion owned by the player or the player does not own that prion strain, then the ability greater than icon will be activated for that section. If the section being examined is less than the same prion owned by the player, the ability less than icon will be activated for that section.

FIGS. 27O and 27P represent low batteries. The first, FIG. 270 represents a low main battery, and FIG. 27P represents a low backup battery.

Finally, FIG. 27Q is the body part selected icon used to indicate the body part the player is trying to pick.

The above icons form the building blocks for displaying information to the user. Additional cut sequences can be used to transition from one screen to another. For example, when the user enters the research area, a cut sequence can be displayed to indicate the transition.

A PCU is equipped with nine buttons. Note that four of the buttons are represented by a single item in the figure. These buttons are the 4-way directional pad. FIG. 1 illustrates the button layout of the PCU.

### POX Abilities

As discussed above, a POX is assembled from a head, body, and tail, each providing special abilities that determine the effectiveness of the resulting POX. Each POX section has the attributes shown in Table 15.

**Table 15**

| **Attribute** | **Description** |
|---|---|
| DNA tag | Owner ID |
| Virus strain | Strain originated from |
| Section ID | Unique section ID |
| Section Name | Section name |
| Ability Frequency | How often an ability is activated (once triggered) |
| Ability Trigger | Event that triggers an ability |
| Ability Activation Strain | Strain the ability is effective against |
| Hitpoints | Hitpoints of section |

An ability is triggered based on an event. When the event occurs, the section is able to use the ability for the duration defined by the ability frequency. Note that activation is also dependent upon the ability activation strain of the attacking section. The ability triggers are summarized in Table16.

**Table 16**

| **Trigger** | **Abbreviation** | **Trigger Event** |
|---|---|---|
| Automatic | A-T | Automatically activated versus Strain |
| Hit | H-T | Activated when it hits proper Strain |
| Blocked | BK-T | Activated when it blocks against proper Strain |
| Damage | D-T | Activated when it is damaged by proper Strain |
| Bump | BP-T | Activated when it is blocked by proper Strain |

Once an ability is triggered, there is a defined frequency for how long the ability will be active. The ability frequency defines the duration. Table 17 lists all of the ability frequencies provided in the one implementation.

**Table 17**

| **Ability Frequency** | **Abbreviation** | **Description** |
|---|---|---|
| 1 Activation | 1A-F | Activated only once |
| Always | A-F | Always active |

Ability triggers are dependent upon the ability activation strain. This attribute, which is illustrated in Table 18, defines what strains are susceptible to the particular ability. If the strain of the section being attacked is not affected by the attacking section and there is not a block, the attacking section hits with normal damage.

**Table 18**

| **Activation Strain** | **Affected Strain** |
|---|---|
| RG | Red/Green |
| GB | Green/Blue |
| BR | Blue/Red |

Every section has an associated hitpoint value. This value defines how much damage the section can endure before it corrupts the POX integrity. Once reached, the POX is either susceptible to stasis (capture by the other PCU) or is defeated (as in the research area).

Hitpoints are gained when they are extracted from a POX trapped in Stasis. The hitpoints are increased ten (10) points per capture subject to the limitations in Table 19.

**Table 19**

| **Prion Type** | **Initial Hitpoints** | **Minimum Hipoints** | **Maximum Hitpoints** |
|---|---|---|---|
| Inert | 10 | 10 | 10 |
| Ability | 30 | 20 | 500 |
| Clone | 30 | 30 | 30 |
| Spy | 5 | 5 | 5 |

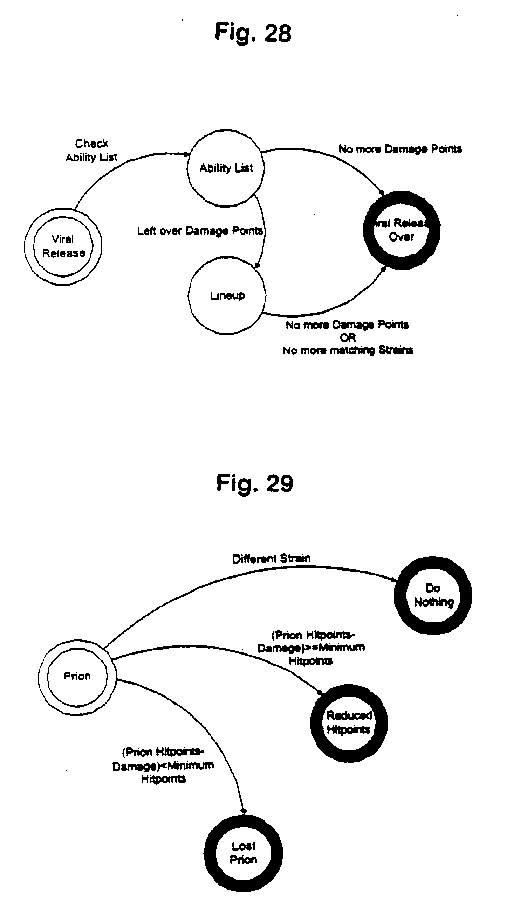

Hitpoints are reduced if an infection reaches viral release. When viral release occurs, the PCU suffers 150 points of damage spread across all sections that are the same strain as the PCU. The damage reduction starts with the abilities of the appropriate strain available to be used to assemble a POX. Damages are applied on a random basis to the abilities. If the ability has 40 hitpoints, 40 points will be reduced from the damage counter. If the damage counter has less than 40 points, the damage reduction will be over. Any ability that is left with less than the minimum hitpoints is removed from the available ability pool. Such abilities are deemed "lost." If there is a surplus of damage hitpoints left after going through the ability list, damages are applied to the appropriate strain in any of the POX in the lineup. These POX, however, cannot be removed. Therefore, they may only be lowered to their minimum hitpoint value. FIG. 28 illustrates the viral release damage path and FIG. 29 illustrates how a prion in the ability list is affected by damage from a viral release.

*Head Section --* The head is the upper section of the POX. It can be used within the RNA matrix to attack and block an assaulting POX. The head of a POX is special in that it always attacks first implicitly. It is also used to determine which POX attacks first in a round. First attack is primarily determined by the strain of the head. In addition to first attack determination, the head implicitly engages upon combat initiation. Any applicable damage or ability activation occurs at that time.

*Body Section --* The body is the mid section of the POX. It can be used within the RNA matrix to attack and block an assaulting POX.

*Tail Section --* The tail is the lower section of the POX. It can be used within the RNA matrix to attack and block an assaulting POX.

Each POX has an RNA matrix. This matrix defines the offensive and defensive characteristics of the POX. The offensive elements define what section attacks and where the attack is directed. The defensive elements define what section is used to block against an attack. Once defined, a POX cannot change this matrix.

POX are represented by three basic virus strains. There is also an inert piece that fundamentally does not have a strain type. This inert prion is used when the player starts. It is vulnerable to any special ability. Since an inert prion has only ten hitpoints, any successful attack only inflicts one point of damage, making an inert section rather weak.

### Red Spino Virus Special Abilities

The red PCUs represent the Spino virus strain. The PCUs consist of mostly the layer that contains the heavy gravity particles. This strain has evolved with power as its primary attribute to overcome the heavy gravity that exists in the environment of the strain. All of the strain's abilities are based on this brute strength and make this strain capable of powerful attacks on the other strains.

Table 20 identifies the morphology of the various red Spino heads.

**Table 20**

| **ID** | **Name** | **Trigger** | **Ability Frequency** | **Normal Damage** | **Special Damage** |
|---|---|---|---|---|---|
| 1-3 | SLAP | A-T | 1A-F | HP*0.1 | damaged HP*0.1 |
| 4-6 | DOUBLE | A-T | 1A-F | HP*0.1 | First successful hit is First successful hit is doubled. |
| 7-9 | PLAGUE | A-T | A-F | HP*0.1 | Five (5) points damage to all sections of both POX at start of each Round Attack. |
| 10-12 | SHOTGUN ENHANCER | A-T | A-F | HP*0.1 | Doubles damage dealt by SHOTGUN. |
| 13-15 | DOUBLE D | A-T | A-F | HP*0.1 | All damage is doubled. |

Table 21 identifies the morphology of the various red Spino bodies.

**Table 21**

| **ID** | **Name** | **Trigger** | **Ability Frequency** | **Normal Damage** | **Special Damage** |
|---|---|---|---|---|---|
| 19-21 | SHOTGUN | H-T | A-F | HP*0.1 | HP/3 damage to all opponent |
| | | | | | sections. |
| 22-24 | TRAMPLE | H-T | A-F | HP*0.1 | HP*0.1 damage to opponent's next section. |
| 25-27 | SMART WEAPON | BP-T | 1A-F | HP*0.1 | The first time this section is blocked, the next section is targeted. |
| 28-30 | HEAD BOLT | H-T | A-F | HP*0.1 | HP*0.1 damage on targeted section. HP*0.1 damage on head. |
| 31-33 | BODY BOLT | H-T | A-F | HP*0.1 | HP*0.1 damage on targeted section. HP*0.1 damage on body. |
| 34-36 | TAIL BOLT | H-T | A-F | HP*0.1 | HP*0.1 damage on targeted section. HP*0.1 damage on tail. |
| 37-39 | CUMULATIVE DAMAGE | H-T | 1A-F | HP*0.1 | HP*0.1*Round_Count damage. |
| 40-42 | OVERRUN | BP-T | A-F | HP*0.1 | Three (3) points, even if blocked and triggered. |

Table 22 identifies the morphology of the various red Spino tails.

**Table 22**

| **ID** | **Name** | **Trigger** | **Ability Freq.** | **Normal Damage** | **Special Damage** |
|---|---|---|---|---|---|
| 46-48 | ONESHOT | H-T | 1A-F | HP*0.1 | HP*0.5 |
| 49-51 | PAIN | H-T | A-F | HP*0.1 | HP*0.15 |
| 52-54 | HEADACHE | H-T | A-F | HP*0.1 | If target is Head, HP*0.2, else Normal Damage. |
| 55-57 | HEART ACHE | H-T | A-F | HP*0.1 | If target is Body, HP*0.2, else Normal Damage. |
| 58-60 | BOTTOM ACHE | H-T | A-F | HP*0.1 | If target is Tail, HP*0.2, else Normal Damage. |
| 61-63 | YO-YO | H-T | A-F | HP*0.1 | Damage alternates between HP*0.1 and HP*0.3. |
| 64-66 | SACRIFICE SHOT | H-T | A-F | HP*0.1 | This ability is checked after the First Attack Determination. If activated, it disables all other attacks and the Head Ability for the POX using this ability. This ability, when it hits, will do HP*1 damage. |
| 67-69 | ALL OR NOTHING | H-T | A-F | 0 | HP*05 |

### Green Cycro Virus Special Abilities

The green PCUs represent the Cycro virus strain. The PCUs consist of mostly the layer that contains the heavy energy particles. This strain has evolved in a high-energy area that was resident in the middle layer, adapting with speed and high-energy as its primary attributes. The green PCUs are super fast and very clever, finding ways to confuse opponents and work around their defenses.

Table 23 identifies the morphology of the various green Cycro heads.

**Table 23**

| **ID** | **Name** | **Trigger** | **Ability Frequency** | **Normal Damage** | **Special Damage** |
|---|---|---|---|---|---|
| 76-78 | ME FIRST | A-T | 1A-F | HP*0.1 | POX fights first, unless deadlock. |
| 79-81 | ROTATE ORDER | A-T | 1A-F | HP*0.1 | If attack sequence does not hit, rotate attack sequence. This testing is quick. It is determined based on the first Round results. |
| 82-84 | SCRAMBLER | A-T | 1A-F | HP*0.1 | If opponent attack focuses on a single section, opponent targeting sequence is reassigned to Head, Body, Tail. |
| 85-87 | CUMULATIVE STRIKE ENHANCER | A-T | A-F | HP*0.1 | CUMULATIVE STRIKE damage is doubled damage is doubled. |
| 88-90 | FREE-BEE | A-T | A-F | HP*0.1 | At the end of every Round, the POX gets an extra attack phase. This attack phase is the attacking section used in the first phase attack. |

Table 24 identifies the morphology of the various green Cycro bodies.

**Table 24**

| **ID** | **Name** | **Trigger** | **Ability Frequency** | **Normal Damage** | **Special Damage** |
|---|---|---|---|---|---|
| 94-96 | FIRST STRIKE | H-T | 1A-F | HP*0.1 | HP*0.1*3 damage |
| 97-99 | DAMAGE SPREAD | D-T | A-F | HP*0.1 | Damage incurred will be distributed to all three sections evenly (HP/3) |
| 100-102 | DODGE | D-T | A-F | HP*0.1 | Next hit taken will be blocked |
| 103-105 | STEP UP | H-T | 1A-F | HP*0.1 | HP*0.1 + Tail Attack. The tail attack hits with Normal Damage. |
| 106-108 | EQUALIZER | H-T | 1A-F | HP*0.1 | Attacking section applied same damage as hit section. |
| 109-111 | DEFLECTION DEFLECTION | H-T | 1A-F | HP 0.1 | Attacking section takes damage instead. |
| 112-114 | CUMULATIVE STRIKES | H-T | 1A-F | HP*0.1 | HP*0.1*Round_Count damage. This is the same as Cumulative Damage; however, the player is shown multiple hits in the animation. |
| 115-117 | GIVE NEXT CUMULATIVE | H-T | 1A-F | HP*01 | HP*0.1*Round_Count to next section. |

Table 25 identifies the morphology of the various green Cycro tails.

**Table 25**

| **ID** | **Name** | **Trigger** | **Ability Freq.** | **Normal Damage** | **Special Damage** |
|---|---|---|---|---|---|
| 121-123 | FADING THREE TO ONE | H-T | A-F | HP*0.1 | Cycles damage to all sections from HP*0.1/3 to HP*0.1/2 to HP*0.1. Then repeats. The cycle is based on a Round. |
| 124-126 | STUN | H-T | 1A-F | HP*0.1 | Knocks out hit ability for five (5) loops. |
| 127-129 | DAMAGE DELAY | D-T | A-F | HP*0.1 | Takes no damage on hit. Accumulates damage and hits attacking section every four (4) Rounds. |
| 130-132 | SUICIDE | H-T | A-F | HP*0.1 | Delivers HP*0. 1*3 damage then shutdown for six (6) Rounds. |
| | | | | | This ability is not shutdown for any other usage within the Round activated. |
| 133-135 | HEMORRHAGE | D-T | 1A-F | HP*0.1 | If damaged, this section takes HP*0.5 damage from one of the other sections and adds it to itself The section drained will be the section with the highest hitpoints. If the hitpoints are equal, it will pick the next section with the body. |
| 136-138 | MAJOR STUN | H-T | A-F | HP*0.1 | Shuts down defending ability for two (2) Rounds. |
| 139-141 | MIMIC | H-T | 1A-F | HP*0.1 | This becomes a copy of the first ability it hits. The Ability Activation Strain of the copy will be the same Ability Activation Strain of this section. This activation will also assume the special ability application of the piece hit. Attacks against a MIMIC or MAJOR MIMIC section have no effect. |
| 142-144 | MAJOR MIMIC | H-T | A-F | HP*0.1 | This section becomes a temporary copy of the ability it hits. The Ability Activation Strain of the copy is the same Ability Activation Strain of this section. This activation assumes the ability application of the piece hit. |

### Blue Plasmo Virus Special Abilities

The blue PCUs represent the Plasmo virus strain. The PCUs consist of mostly the meteorite layer that is toxic to virtually every form of life on Earth. This strain defies all biological laws having come from the area of the meteorite that appears toxic to all forms of life. They have developed great natural environmental armor and use this armor to great advantage when mounting a counter-attack against a threat.

Table 26 identifies the morphology of the various blue Plasmo heads.

**Table 26**

| **ID** | **Name** | **Trigger** | **Ability Frequency** | **Normal Damage** | **Special Damage** |
|---|---|---|---|---|---|
| 151-153 | PROTECTION | A-T | 1A-F | HP*0.1 | Opponent's first phase attack is cancelled. |
| 154-156 | HALF | A-T | 1A-F | HP*0.1 | First damage applied to the POX is reduced by half. |
| 157-159 | MINOR ABSORB ENHANCER | A-T | A-F | HP*0.1 | Doubles the damage MINOR ABSORB absorbs. |
| 160-162 | HELMENT | A-T | 1A-F | HP*0.1 | Head is protected from damage for ten (10) Rounds. |
| 163-165 | HALFD | A-T | A-F | HP*0.1 | All damage taken is reduced by half. |

Table 27 identifies the morphology of the various blue Plasmo bodies.

**Table 27**

| **ID** | **Name** | **Trigger** | **Ability Frequency** | **Normal Damage** | **Special Damage** |
|---|---|---|---|---|---|
| 169-171 | MINOR ABSORB | BK-T | A-F | HP*0.1 | If section blocks attack, the damage is absorbed and added to the damage of the next hit. |
| 172-174 | MINOR HEAL | D-T | A-F | HP*0.1 | Heals itself one (1) point at the beginning of each Round. |
| 175-177 | SMART SHIELD | D-T | A-F | HP*0.1 | The blocking order for the POX is rotated. |
| 178-180 | REVERSE DAMAGE | D-T | 1A-F | HP*0.1 | On first hit, section gains damage that would have been inflicted. |
| 181-183 | COUNTER WALL | D-T | 1A-F | HP*0.1 | When hit by the first special ability, it allows that ability to activate, and then turns the special ability into an inert prion for that attack. |
| 184-186 | MAJOR ABSORB | BK-T | A-F | HP*0.1 | When this section blocks an attack, it absorbs the damage. When this section hits, the damage will be HP*0.1+Absorbed Damage. |
| 187-189 | MAJOR HEAL | D-T | A-F | HP*0.1 | Takes damage and then heals itself HP*0.1 at the start of each Round. |
| 190-192 | SHADOW | D-T | A-F | HP*0.1 | All damage targeting this section is reduced by this section is reduced by half. |

Table 28 identifies the morphology of the various blue Plasmo tails.

**Table 28**

| **ID** | **Name** | **Trigger** | **Ability Freq.** | **Normal Damage** | **Special Damage** |
|---|---|---|---|---|---|
| 196-198 | REPERCUSSION | D-T | A-F | HP*0.1 | Takes the damage but also damages attacking section by half the damage taken. |
| 199-201 | SHIELD DEFENSE | D-T | A-F | HP*0.1 | Takes the damage, but blocks the attack in the next phase. This attack is overridden by the TRAMPLE attack. |
| 202-204 | DAMAGE LIMIT | D-T | A-F | HP*0.1 | Bounds damage taken to twenty-five points. |
| 205-207 | MIX IT UP | D-T | 1A-F | HP*0.1 | Can only take damage from the first section that hits this section. |
| 208-210 | DAMAGE DELAY SPREAD | D-T | A-F | HP*0.1 | Absorbs the damage taken for three loops. Then, applies the absorbed damage evenly across all three sections. |
| 211-213 | DAMAGE BUFFER | D-T | A-F | HP*0.1 | Section will only take DAMAGE*0.3 damage. |
| 214-216 | SHUTDOWN | D-T | 1A-F | HP*0.1 | Takes the damage from the first hit and then disables the attacking section. |
| 217-219 | SIMULACRUM | D-T | A-F | HP*0.1 | Redirects damage to section with the highest hitpoints. The hitpoints checked are the battle hitpoints, not the original hitpoints. |

### POX Web Site

In one implementation, players can connect to a web site for POX that gives hints and breaking news to users. The web site also creates a community of players to track the progress of their POX sections. Players register their PCUs at certain sites. These sites take some statistical information about the player and affiliate the player's PCU identifier with the player. Players also pick a name that is used on the web site to identify that user. On the site, players can examine prions they have collected and determine the origins of the prions. They can also see where prions that they created have gone.

### Alternative Implementations

One implementation includes electronic toys connected through various networking technologies. For example, one electronic toy may be a palm computing device with a wireless network card. Another electronic toy may be a desktop workstation with a physical network connection. Additional electronic toys may be embodied as cellular telephones or as conventional handheld electronic toys with a wireless network interface card attached.

Additional implementations use various networking protocols to facilitate communication between various electronic toys. For example, electronic toys may communicate using the cellular digital packet data (CDPD) standard or use any other available communication mechanism.

The above description sets forth a very detailed implementation of a gaming system. The claims are is not intended to be limited to this particular implementation. Readers will appreciate that, using conventional game development techniques, a programmer of ordinary skill in the art can implement many other games embodying the recited concepts. For example, the above disclosure describes one technique for conducting a game by sending a description of a pre-programmed unit across a wireless network. Many variants on this technique can be implemented. One such implementation is a football game in which users send descriptions of players and plays across a wireless network to provide a wireless interactive gaming experience.

A system can be created that uses a combination of wireless and wired gaming units. Handheld game units can wirelessly communicate to a desktop system running game software and hardwired to a physical network.

## Claims

1. An electronic game unit comprising:
a housing;
a display;
at least one input device;
a power source;
a transceiver operable to wirelessly send and receive data; and
a computing device positioned in the housing, connected to the display, the at least one input device, the power source, and the transceiver, the computing device programmed to:
display a player character; and
wirelessly transmit information regarding the player character.

2. The electronic game unit of claim 1 wherein the display, the at least one input device, the power source, and the transceiver are each contained within the housing.

3. The electronic game unit of claim 1 or claim 2 wherein the display comprises a liquid crystal display.

4. The electronic game unit of any of claims 1 to 3 wherein the display comprises an active matrix display.

5. The electronic game unit of any of the preceding claims wherein the at least one input device includes one or more from the group consisting of: a plurality of directional buttons; a sound control; a pause button; and one or more select buttons.

6. The electronic game unit of any of the preceding claims further comprising an on/off switch.

7. The electronic game unit of claim 6 wherein the on/off switch includes a light emitting diode (LED) positioned within or near the on/off switch, the LED emitting light to indicate a status of the electronic game.

8. The electronic game unit of any of the preceding claims wherein the transceiver sends and receives infrared signals.

9. The electronic game unit of any of claims 1 to 7 wherein the transceiver sends and receives radio frequency signals.

10. The electronic game unit of any of the preceding claims wherein the computing device includes
a memory; and
a processor, connected to the memory.

11. The electronic game unit of claim 10 wherein the processor is a general-purpose computer processing unit.

12. The electronic game unit of claim 10 wherein the processor is an application-specific integrated circuit (ASIC).

13. The electronic game unit of any of claims 10 to 12 wherein the memory includes one or more from the group consisting of: a random access memory (RAM), a static random access memory (SRAM), a dynamic random access memory (DRAM), and synchronous DRAM (SDRAM).

14. The electronic game unit of any of claims 10 to 13 wherein the memory is external to the processor.

15. The electronic game unit of any of claims 10 to 13 wherein the memory is integral to the processor.

16. The electronic game unit of any of the preceding claims wherein the power supply is one from the group consisting of: a rechargeable battery; and a non-rechargeable battery.

17. The electronic game unit of any of claims 1 to 15 wherein the power supply includes one or more from the group consisting of: a lithium rechargeable batter; a nickel-metal hydride rechargeable batter; and a nickel-cadium rechargeable battery.

18. The electronic game unit of any of the preceding claims wherein the computing device is further configured to provide a solo game module that may be used to obtain items.

19. The electronic game unit of claim 18 wherein the items obtained through the solo game module may be used to acquire one or more player character.

20. The electronic game unit of any of the preceding claims wherein the computing device is further configured to provide a tutorial module, the tutorial module operable to demonstrate one or more features of the electronic game unit.

21. The electronic game unit of claim 20 wherein the tutorial module is operable to demonstrate the operation of a solo game module.

22. The electronic game unit of any of the preceding claims wherein the computing device is further configured to provide a fight module, the fight module operable to wirelessly send a player character.

23. The electronic game unit of claim 22 wherein the fight module is operable to receive a wirelessly transmitted player character.

24. The electronic game unit of claim 18 wherein the computing device is further configured to provide a stasis lab module, the stasis lab module operable to generate one or more player characters using items acquired from the solo game module.

25. The electronic game unit of claim 24 wherein the items obtained from the solo game module include one or more player character components.

26. The electronic game unit of claim 25 wherein the one or more player character components include one or more from the group consisting of: a head, a body, and a tail.

27. The electronic game unit of claim 26 wherein a player character is generated by combining a head, a body, and a tail.

28. The electronic game unit of any of the preceding claims wherein the computing device is further configured to provide a combat module, the combat module operable to fight a player character received by the transceiver.

29. A method for administrating an electronic game unit using a base station, the base station including a transceiver operable to wirelessly send and receive data, the method comprising:
determining an administrative action to perform; and
transmitting a signal indicative of the administrative action, the signal receivable by an electronic game unit,
wherein the signal is operable to perform the administrative action on the electronic game unit.

30. The method of claim 29 wherein the administrative action is to activate a feature of the electronic game unit.

31. The method of claim 29 wherein the administrative action is to deactivate a feature of the electronic game unit.

32. The method of claim 30 wherein the feature is a hidden feature of the electronic game unit.

33. The method of claim 29 wherein the administrative action is to download information from a data store of the electronic game unit.

34. The method of claim 29 wherein the administrative action is to upload information to a data store of the electronic game unit.

35. The method of claim 29 wherein the administrative action is to test the electronic game unit.

36. The method of claim 29 wherein the administrative action is to display information regarding the electronic game unit.

37. A method for receiving data from an electronic game unit, the method comprising:
entering a sleep mode to minimize battery drain;
periodically checking a communication channel to determine if the communication channel is in use;
if the communication channel is determined to be in use, entering a receive mode to accept data from the communication channel;
wherein data may be received without transmitting any information.

38. The method of claim 37 wherein the communication channel has a nominal transmission frequency of 300 MHz.

39. The method of claim 38 wherein the data transmission rate is approximately 12 kbps.

40. An electronic game unit comprising:
a transceiver operable to communicate with one or more enemy electronic game systems;
a memory, the memory operable to store a designated character; and
a computing device connected to the memory and the transceiver, and wherein the computing device is configured to transmit the designated character to the one or more enemy game units, and to receive a designed character from the one or more enemy game units.

41. An electronic game unit comprising:
a memory operable to store one or more characters; and
a computing device connected to the memory, and wherein the computing device is configured to provide a game, the game including:
a collection phase for obtaining character components;
an assembly phase for creating characters from the character components; and
a battle phase whereby created characters may enter combat with enemy characters.

42. The electronic game unit of claim 41 wherein the character components include one or more from the group consisting of:
a head;
a body; and
a tail.
